# EUROPÄISCHE PATENTSCHRIFT

(11) **EP 2 906 676 B1**
(45) Veröffentlichungstag und Bekanntmachung des Hinweises auf die Patenterteilung: **15.08.2018**
(21) Anmeldenummer: 13798235.1
(22) Anmeldetag: 02.10.2013
(51) Int. Cl.: C12C 1/02

(54) **MÄLZUNGSVERFAHREN**
MALTING METHOD
PROCÉDÉ DE MALTAGE

(30) Priorität: 09.10.2012 DE 102012020077
(43) Veröffentlichungstag der Anmeldung: 19.08.2015
(73) Patentinhaber: Technische Universität Berlin, 10623 Berlin (DE)
(72) Erfinder: MÜLLER, Christian, 95326 Kulmbach (DE); METHNER, Frank-Jürgen, 54634 Bitburg (DE); KUNZ, Thomas, 10178 Berlin (DE)
(74) Vertreter: Fischer, Uwe
(86) Internationale Anmeldenummer: PCT/DE2013/200198
(87) Internationale Veröffentlichungsnummer: WO 2014/056498

(56) Entgegenhaltungen:
- WO-A1-99/23260
- DD-A1- 278 595
- DE-A1- 19 741 741
- DE-A1-102009 003 308
- DE-C- 873 531
- RU-C1- 2 332 446

## Beschreibung

Die Erfindung bezieht sich auf ein Mälzungsverfahren, insbesondere im Rahmen der Herstellung von Bier, bei dem Rohfrucht (z.B. Getreide, Gerste, Weizen, Roggen, Dinkel, Reis, Mais u.a.) in Wasser eingeweicht wird.

Ein ähnliches Mälzungsverfahren ist aus der chinesischen Offenlegungsschrift CN 102174345 A bekannt. Bei dem vorbekannten Mälzungsverfahren wird Gerste in Wasser eingeweicht und das daraus gebildete Gemisch mittels eines Ultraschallgenerators in Ultraschallschwingungen zwischen 35 und 100 kHz versetzt.

Aus der deutschen Offenlegungsschrift DE 10 2009 003 308 A1 ist ein Verfahren zum Austreiben von Gasen aus dem Weichwasser während eines Weichprozesses beim Mälzen bekannt.

Der Erfindung liegt die Aufgabe zugrunde, ein Mälzungsverfahren der oben angegebenen Art weiter zu verbessern.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass während zumindest eines Zeitabschnitts des Einweichens das Gemisch in eine mechanische Schwingung versetzt wird, deren Schwingfrequenzspektrum zumindest auch eine Frequenz zwischen 180 und 300 Hz aufweist.

Ein wesentlicher Vorteil des erfindungsgemäßen Mälzungsverfahrens ist darin zu sehen, dass durch die erfindungsgemäß eingebrachten Schwingungen die Reinigung der Rohfrucht verbessert, die Wasseraufnahme und die Ankeimung beschleunigt und dadurch eine höhere Malzqualität erreicht wird, weil das Schwingfrequenzspektrum zumindest auch unterhalb des Ultraschallbereichs liegt. So kann beispielsweise durch den erfindungsgemäß vorgesehenen Frequenzbereich beim fertigen Malz die Keimbelastung durch Bakterien und Schimmelpilze um bis zu 50 % - im Vergleich zu einem Mälzungsverfahren ohne Schwingungsunterstützung - reduziert werden.

Ein weiterer wesentlicher Vorteil des erfindungsgemäßen Mälzungsverfahrens ist darin zu sehen, dass durch die erfindungsgemäß eingebrachten Schwingungen der Gehalt an prooxidativ wirkenden Metallionen(insbesondere Eisen) im fertigen Malz deutlich herabgesetzt wird. Auf diesem Wege kann der rohstoffbedingte prooxidativ wirkende Metallioneneintrag /Eiseneintrag während dem Brauprozess um bis zu 35 % reduziert werden. In Folge wird eine signifikant höhere oxidative Würze- bzw. Bierstabilität erreicht.

Ein weiterer wesentlicher Vorteil des erfindungsgemäßen Mälzungsverfahrens ist darin zu sehen, dass das resultierende Malz deutlich homogener ist als Malz, das mit einem Mälzungsverfahren ohne die erfindungsgemäße Schwingungsunterstützung hergestellt wird.

Ein weiterer wesentlicher Vorteil des erfindungsgemäßen Mälzungsverfahrens ist darin zu sehen, dass die resultierende höhere Homogenität und Malzqualität der Malze nachweislich zu verbesserten Läutereigenschaften führt. Dies ist von besonderer Bedeutung da das Läutern den geschwindigkeitsbestimmenden Prozessschritt bei der Würzeproduktion im Brauprozess (im Sudhaus) darstellt. Folglich kann bei Anwendung des erfindungsgemäßen Mälzungsverfahrens der Zeit- und Kostenaufwand für die Bierproduktion gesenkt werden.

Mit Blick auf die Reinigung der Rohfrucht sowie auf die Homogenität des Malzes ist erfindungsgemäß vorgesehen, dass der Wert der Schwingfrequenz der mechanischen Schwingung zwischen 180 und 300 Hz beträgt.

Vorzugsweise wird die mechanische Schwingung durch den Einsatz eines Rüttlers (mechanischer Innenvibrator) im Einweichgefäß - nachfolgend kurz Weichgefäß genannt - erzeugt. Die Anwendung der vom Rüttler erzeugten mechanischen Schwingungen bzw. Schallwellen erfolgt bevorzugt mit einer Rüttelfrequenz zwischen 180 und 300 Hz.

Vorzugsweise wird die mechanische Schwingung mit einer Rütteleinrichtung, insbesondere einer Rüttelplatte oder einem sogenannten Zementrüttler, von außen erzeugt.

Alternativ oder zusätzlich kann die mechanische Schwingung mit einer in dem Gemisch bzw. in dem Weichgefäß befindlichen Schwingungserzeugungseinrichtung, insbesondere einem Vibrator (mechanischer Innenvibrator), erzeugt werden.

Während zumindest eines Zeitabschnitts des Einweichens oder auch die ganze Einweichzeit über kann das Gemisch mit Sauerstoff oder einem sauerstoffhaltigen Gas, insbesondere Luft, belüftet werden. Alternativ kann das Einweichen belüftungslos durchgeführt werden.

Das Einweichen kann ein, zwei- oder mehrphasig erfolgen. Als besonders vorteilhaft wird es angesehen, wenn das Einweichen der Rohfrucht zumindest eine erste Einweichphase, eine auf die erste Einweichphase folgende Rastphase und eine auf die Rastphase folgende zweite Einweichphase umfasst.

Erfolgt die erste Einweichphase belüftungslos, so ist es vorteilhaft, wenn das Gemisch die letzten drei bis vier Stunden der ersten Einweichphase in die mechanische Schwingung ver setzt wird.

Erfolgt die zweite Einweichphase belüftungslos, so wird das Gemisch vorzugsweise frühestens nach 30 Minuten, besonders bevorzugt frühestens nach 60 Minuten, in die mechanische Schwingung versetzt.

Vorzugsweise wird zur Malzbildung als Rohfrucht (z.B. Getreide, Gerste, Weizen, Roggen, Dinkel, Reis, Mais, etc. eingeweicht.

Die Erfindung bezieht sich darüber hinaus auf ein Verfahren zum Herstellen von Bier. Erfindungsgemäß wird Malz hergestellt, wobei die Rohfrucht in Wasser eingeweicht wird und während zumindest eines Zeitabschnitts des Einweichens das Gemisch in eine mechanische Schwingung versetzt wird, deren Schwingfrequenz einen Wert zwischen 180 und 300 Hz aufweist. Das Bier wird erfindungsgemäß unter Verwendung dieses Malzes gebraut.

Die Erfindung bezieht sich darüber hinaus auf eine Mälzeinrichtung mit einem Weichgefäß zum Einweichen von Rohfrucht in Wasser und einer Schwingungserzeugungseinrichtung.

Erfindungsgemäß ist bezüglich einer solchen Mälzeinrichtung vorgesehen, dass die Schwingungserzeugungseinrichtung geeignet ist, das das Wasser und das Rohfrucht aufweisende Gemisch in eine mechanische Schwingung zu versetzen, deren Schwingfrequenz einen Wert zwischen 180 und 300 Hz aufweist.

Bezüglich der Vorteile der erfindungsgemäßen Mälzeinrichtung sei auf die obigen Ausführungen im Zusammenhang mit dem erfindungsgemäßen Mälzungsverfahren verwiesen, da die Vorteile des erfindungsgemäßen Mälzungsverfahrens denen der erfindungsgemäßen Mälzeinrichtung im Wesentlichen entsprechen.

Bezüglich der Mälzeinrichtung wird es als vorteilhaft angesehen, wenn die Schwingungserzeugungseinrichtung eine von außen auf das Weichgefäß einwirkende Rütteleinrichtung, insbesondere eine Rüttelplatte und/oder einen in dem Weichgefäß angeordneter Zementrüttler, bzw. angeordneten Vibrator umfasst oder durch eine solche Rütteleinrichtung oder einen solchen Vibrator gebildet ist.

Unter einem Zementrüttler werden im Sinne dieser Anmeldung Einrichtungen verstanden, die unter anderem auch die Form einer Schneckenschraube besitzen.

Die Erfindung wird nachfolgend anhand zweier Ausführungsbeispielen näher erläutert; dabei zeigen beispielhaft
- Figur 1: ein Ausführungsbeispiel für eine metallkatalysierte Bildung von Hydroxylradikalen,
- Figur 2: einen Vergleich der Weichwassertrübung über der Gerste nach der 1. Nassweiche (links mit Rüttler (Schallwelleneintrag); rechts ohne Rüttler (Schallwelleneintrag),
- Figur 3: einen Trübungsvergleich der Weichwässer der ersten Nassweiche nach dem Ablauf,
- Figur 4: einen Vergleich der Wasseraufnahme durch eine bzw. zwei Nassweichen mit und ohne Rütteln,
- Figur 5: einen Vergleich der Ankeimung der geweichten Proben,

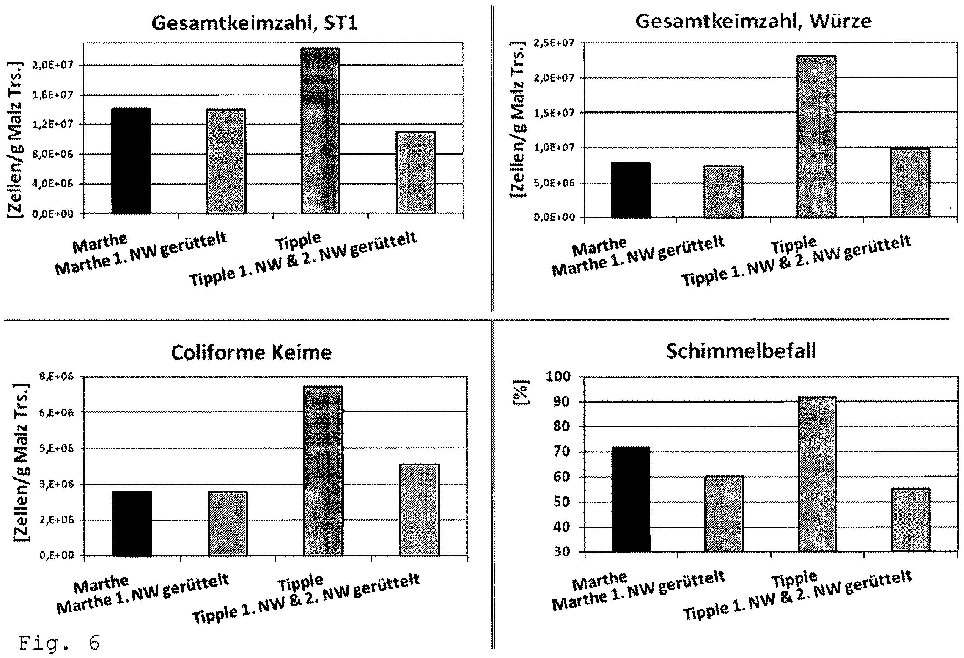

- Figur 6: einen Vergleich der mikrobiologischen Belastung auf den fertigen Malzen,
- Figur 7: die Eisengehalte der aus den Malzen produzierten Würzen,
- Figur 8: den Sauerstoffverbrauch während einer ersten und zweiten unbelüfteten Nassweiche im Pilotmaßstab,
- Figur 9: einen Vergleich der Wasseraufnahme durch die zwei Nassweichen mit und ohne Rütteln - Versuchsreihe 2,
- Figur 10: die Ankeimung der geweichten Proben - Versuchsreihe 1,
- Figur 11: die Verläufe der Sauerstoffkonzentrationen während den ersten Nassweichen (NW) - Versuchsreihe 2,
- Figur 12: die Verläufe der Sauerstoffkonzentrationen während den zweiten Nassweichen (NW) - Versuchsreihe 2 (unbelüftet, erst nach einer Stunde beschallt),
- Figur 13: einen Vergleich der Homogenität (Carlsberg-Methode und Blattkeimlänge) [13] - Versuchsreihe 1,
- Figur 14: einen Vergleich der Homogenität (Carlsberg-Methode und Blattkeimlänge) [13] - Versuchsreihe 2,
- Figur 15: einen Vergleich der Ablaufzeiten der Kongressmaischen nach MEBAK [13] - Versuchsreihe 1,
- Figur 16: die Verläufe der mittels Laborläutertests untersuchten Malze - Versuchsreihe 1,
- Figur 17: die Verläufe der mittels Laborläutertests untersuchten Malze - Versuchsreihe 2,
- Figur 18: einen Vergleich der mikrobiologischen Belastung auf den fertigen Malzen - Versuchsreihe 1,
- Figur 19: einen Vergleich der mikrobiologischen Belastung auf den fertigen Malzen - Versuchsreihe 2,
- Figur 20: die Eisengehalte der aus den Malzen produzierten Kongresswürzen- Versuchsreihe 1,
- Figur 21: die Eisengehalte der aus den Malzen produzierten Würzen (Stammwürze 12 %) - Versuchsreihe 2 und
- Figur 22: eine EAP-Bestimmung der aus den belüfteten Malzen produzierten Würzen - Versuchsreihe 2.

### A) Erstes Ausführungsbeispiel der Erfindung:

Bei dem ersten Ausführungsbeispiel geht es um den Einsatz von Schallwellen mittels Zementrüttler bzw. eines Innenvibrators im Mälzungsprozess zur Verbesserung der Malzqualität.

### Einsatz von Schallwellen zur Verbesserung der Malzqualität

Es ist hinreichend bekannt, dass die eingesetzten Rohstoffe Malz, Hopfen und Brauwasser einen entscheidenden Einfluss auf die sich ergebende Qualität eines Bieres haben. Die für ein Bier qualitätsentscheidenden Malzmerkmale werden wesentlich durch den Mälzungsprozess bestimmt. Daher ist es wichtig bestimmte Mälzungsparameter einzuhalten und die Malzqualität zu überprüfen.

### 1.1 Herstellung des Malzes

Der Mälzungsprozess kann in drei Prozessabschnitte unterteilt werden, das Weichen, Keimen und Darren. Beim Weichen wird eine schnelle und homogene Wasseraufnahme der Gerste angestrebt und die Keimung der Gerste eingeleitet. Dazu wird die so genannte Weiche (Weichgefäß) zwei bis dreimal für einige Stunden geflutet (Nassweiche). Zwischen den Nassweichen wird die Gerste ausgiebig belüftet (Luftrast), um eine ausreichende Sauerstoffversorgung der Gerste zu gewährleisten und das durch die Keimung entstehende Kohlendioxid abzuführen. Die durch das Weichen hervorgerufene Wasseraufnahme der Gerste wird im Wesentlichen durch den Luftdurchsatz während der Luftrast und die Temperaturen des Weichwassers bzw. der Luft (10 - 17°C) bestimmt. Ebenso ist das Verhältnis der Nassweiche- zur Luftrastdauer (z.B. 1:2,5 - 1:4,5) für die Wasseraufnahme von entscheidender Bedeutung (z.B. 4 h NW / 20 h LR / 3 h NW). Ist ein Weichgrad von 36 - 38 % erreicht wird das Keimgut entweder nass oder trocken in den Keimkasten ausgeweicht und auf der Horde bis zu einer Höhe von 1 - 1,30 m mittels Schneckenwendern verteilt. Zur Einstellung des angestrebten Weichgrades von 40 - 48 % wird das so genannte Grünmalz in den ersten zwei Keimtagen mit Wasser besprüht.

Ziele des Keimens sind möglichst hohe Enzymaktivitäten zu entwickeln, den Extrakt durch den Abbau der Hüllsubstanzen der Stärkekörner (Gummistoffe) freizulegen und einen definierten Eiweißabbau zu erreichen. Dabei soll das Wachstum möglichst gering gehalten werden, um möglichst wenig Extraktverluste zu haben.

Im Allgemeinen führt ein höherer Weichgrad zu gesteigerten Enzymaktivitäten, wodurch eine bessere cytolytische Lösung (Zellwandlösung) und eine verstärkter Eiweißabbau in der Gerste bzw. im Malz erreicht wird. Dadurch werden die Keimungsvorgänge beschleunigt, was sich in einem erhöhten Mälzungsschwand widerspiegelt. Entsprechend kann durch höhere Weichgrade die Keimdauer verkürzt werden [29].

Die Keimdauer liegt normalerweise zwischen 4 und 7 Keimtagen. Die Festlegung der Keimdauer ist ein Kompromiss zwischen der angestrebten Malzqualität und der Minimierung der Produktionskosten und Mälzungsschwände durch das Wachstum. Während der Keimung muss das Grünmalz mit temperierter und 100 % befeuchteter Luft belüftet werden, um eine ausreichende Sauerstoffversorgung bzw. Kohlendioxidentfernung zu gewährleisten und die durch Atmung entstehende Wärme abzuleiten. Zur Unterstützung der Belüftung und zur Vermeidung von Klumpenbildung durch das Zusammenwachsen der Wurzelkeime wird das Keimgut anfangs einmal und ab dem dritten Keimtag dreimal täglich mit Hilfe von Schneckenwendern gewendet. Die Parameter der Keimung sind die Temperatur des Keimgutes, die Keimdauer, der Weichgrad des Grünmalzes, die Häufigkeit des Wendens, der Luftdurchsatz und der definierte Anteil der Rückluft zur Anreicherung des CO₂-Gehaltes im Keimgut. Mittels der Anreicherung des CO₂-Gehaltes in der Zuluft kann das Wachstum zum vorgesehenen Ende der Keimung gehemmt werden. Zum Abbruch der Keimung und um das Malz haltbar zu machen ist ein zusätzlicher Trocknungsschritt, das Darren, erforderlich. Das Darren kann in zwei Phasen unterteilt werden. In der ersten Phase, der Schwelkphase, wird das Grünmalz zur Schonung der Enzyme bei niedrigen Temperaturen (50 - 65°C) bis zu einem Wassergehalt von 10 - 14 % vorgetrocknet. Sobald die Temperatur der Abluft über dem Keimgut ansteigt ("Durchbruch"), wird die Temperatur der Zuluft abhängig vom Malztyp auf 80 - 110°C erhöht und das Malz bei erreichter Abdarrtemperatur für 3 - 5 Stunden abgedarrt. Während der Darrphase werden verschiedenste Aroma- und Farbkomponenten durch Stoffumwandlungen (Maillard-Reaktionen, Karamellisierung etc.) gebildet, die Enzyme vorübergehend inaktiviert und der Wassergehalt auf 4 - 5 % gesenkt. Zu den Darrparametern gehören die Höhe der Schwelk- und Abdarrtemperaturen, der Temperaturverlauf, der Luftdurchsatz und das Verhältnis der Zu- und Umluft. Damit die Mälzereien mit möglichst wenig Energie- und Wasserverbrauch gute Malze bei kurzen Belegungszeiten der Betriebsanlagen herstellen können, ist die Technologie des Mälzens im Laufe der Jahrzehnte weitestgehend optimiert worden. Dadurch war es möglich die steigenden Qualitätsansprüche der Brauereien erfüllen zu können [12, 20].

### 1.2 Einfluss des Sauerstoffgehaltes beim Mälzen auf die Malzqualität

Generell findet man in der Literatur, dass eine Belüftung beim Weichen sowohl in den Nassweichen als auch in den Luftrasten zu einer schnelleren Ankeimung und aber nach der Keimung nur geringfügig zu einer höheren Malzlösung führt. [30 ,31, 32]

Nach Kretschmer et al. [10] bewirkt eine Sauerstoffreduzierung beim Keimen (Zuluft mit Luft, Stickstoff oder reinem Sauerstoff) neben der Reduzierung des Mälzungsschwandes, dem Absenken des Eiweißlösungsgrades, ein Ansteigen der Rohfettgehalte bei gleichzeitiger Erhöhung der LOX-Aktivitäten und eine Verbesserung der Geschmacksstabilität der Biere. Eine Sauerstoffreduzierung beim Schwelken bewirkt neben einer Erhöhung der VZ 45°C hellere Würzefarben.

### 1.3 Aktivierung von Sauerstoff

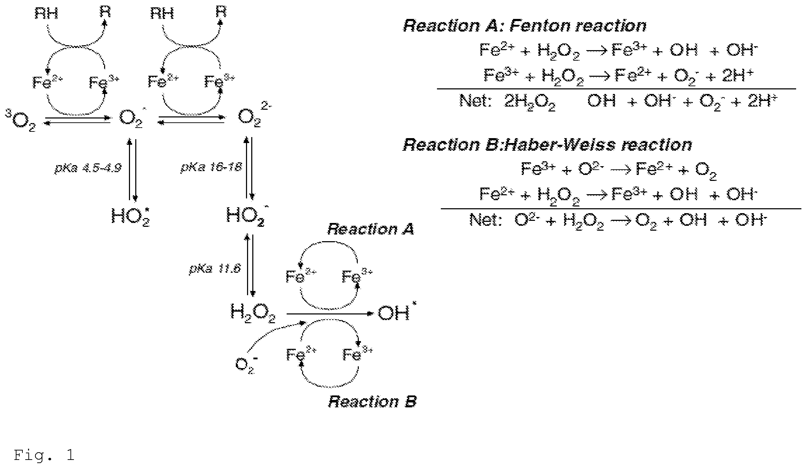

Beim Mälzungsprozess, z.B. beim Belüften des Weichgutes und den hohen Luftdurchsatz beim Keimen und Darren, wird das Produkt ständig mit viel molekularem Sauerstoff umströmt. Viele der während des Mälzens stattfindenden Oxidationsprozesse werden durch aktivierte Sauerstoffformen initiiert. D.h. der relativ stabile molekulare Sauerstoff muss erst aktiviert werden, bevor er mit Malzinhaltstoffen reagieren kann. Diese Aktivierung ist temperaturabhängig und erfolgt über verschiedene Zwischenstufen bis hin zum sehr reaktiven Hydroxylradikal, wobei diese Zwischenstufen selbst ebenfalls schon reaktiv sind. Man spricht von den so genannten Reactive Oxygen Species (ROS: O₂^{●}, O₂², HO₂⁻, H₂O₂). [1, 3, 11, 15, 27]. Das bei der Sauerstoffaktivierung gebildete Wasserstoffperoxid H₂O₂ wird durch im Malz und Weichwasser vorhandene Metallionen (z.B. Fe²⁺, Fe³⁺, Cu⁺) katalytisiert in ein Hydroxylion und ein sehr reaktives Hydroxylradikal gespalten, das unspezifisch mit Malzinhaltsstoffen wie organische Säuren, Proteine, phenolische Verbindungen etc. reagiert [10, 13, 14]. In Figur 1 sind die beiden Mechanismen der Fenton- und Haber-Weiss-Reaktion, die für die katalytischen Reaktionen verantwortlich sind, dargestellt [9].

### 1.4 Enzyme zum Schutz vor aktivierten Sauerstoff

Für den Schutz vor aktivierten Sauerstoffspezies sind in Rohfrucht bzw. Getreide mehrere Enzyme vorhanden. Die Wichtigsten sind im Folgenden aufgelistet: Superoxiddismutase (SOD) [7, 22], Katalase [2, 7, 23], Peroxidase [20, 21, 22], Polyphenoloxidase [2, 32, 36], Lipoxygenase (LOX) [1, 16, 17, 18, 19, 24, 25].

### 1.4.0 Antioxidative Gersten- und Malzinhaltsstoffe

Des Weiteren sind in Gerste bereits viele antioxidativ wirkende Substanzen, wie Polyphenole [2, 6, 8], Gluthathion [2], Vitamine z.B. Ascorbinsäure und Vitamin E [2], etc. vorhanden. Weitere entstehen während des Mälzungsprozesses z.B. durch die Maillardreaktionen [26].

Nach Bright et al. [3] kann ein Antioxidans generell als Substanz, die oxidative Reaktionen inhibiert, definiert werden. Antioxidantien haben verschiedenste Wirkungsweisen. Sie fangen molekularen Sauerstoff oder aktivierte Sauerstoffspezies ab, wirken als Reduktionsmittel durch Abgabe von Protonen, die direkt mit Sauerstoff reagieren, oder binden katalytisch wirkende Metallionen durch Chelatbildung [5, 15].

### 1.4.1 Polyphenole

Ein Großteil (∼ 80 %) der Polyphenole im Bier stammen aus dem Malz. Sie sind nach Goupy et al. [13, 14] bekannt für ihre reduzierende Wirkung, das Verhindern der Autoxidation durch die Reaktion mit Peroxyradikalen und die Bindung von prooxidativ wirkenden Metallionen. Phenolsäuren und Flavonoide sind nach Bamforth et al. [2] in der Lage aufgrund ihres konjugierten Doppelbindungssystems durch Elektronenabgabe bestimmte Verbindungen zu reduzieren und effektiv Singulettsauerstoff, Superoxidanionen und Hydroxylradikale abzufangen. Außerdem sind sie Substrat für die Polyphenoloxidasen und Peroxidasen und somit auch indirekt an der enzymatischen Verhinderung der Radikalbildung beteiligt [2, 6, 8].

Nach Woffenden et al. [26] kondensiert ein Teil der oxidierten Polyphenole durch die hohen Temperaturen beim Darren, was zu einer höheren antioxidativen Aktivität durch eine erleichterte Fähigkeit der Moleküle zur Protonenabspaltung und zu einer vermehrten Bindung von Metallionen führt.

### 1.4.2 Melanoidine und Reduktone

Melanoidine und Reduktone sind antioxidativ wirkende Produkte der Maillard-Reaktion (Nicht-Enzymatische Bräunungsreaktion), die besonders bei hohen Temperaturen während des Darrprozesses und der Würzekochung im Brauprozess entstehen. Die Parameter Wassergehalt beim Darren, Darrtemperatur und -dauer, etc. haben einen direkten Einfluss auf die durch die Maillard-Reaktion entstehenden reduzierenden Substanzen [12]. Maillard-Reaktionen sind Reaktionen von einfachen Zuckern mit Aminosäuren oder kleinen Peptiden zu N-Substituierten Glycosylaminen, die zu Amadori- oder Heyns-Produkten umgelagert werden. Die letztgenannten Produkte bilden die Ausgangssubstanzen für eine Reihe von weiteren Reaktionen, die zu Farbpigmenten (Melanoidine), Reduktonen, Carbonylverbindungen, Röstaromen etc. führen [5, 15].

Wolffenden et al. [26] und Coghe et al. [4] haben in ihren Untersuchungen herausgefunden, dass die Reduktions- und Radikalfängerfähigkeit der Reduktone und Melanoidine umso höher sind, je höher die Darrtemperatur und je niedriger die relative Luftfeuchtigkeit der Zuluft ist. Nach Forster [9] zeigen Dimethylhydroxyfuranone die stärkste antioxidative Aktivität, gefolgt von Oxazolen und schließlich Thiazolen.

Melanoidine sind in der Lage die Sauerstoffspezies Superoxidanion, Peroxidanion, und Hydroxylradikale und Peroxylradikale (ROO^{●}) abzufangen [2, 15].

Neuere Untersuchungen haben jedoch aufgezeigt, dass bestimmte Maillard Intermediärprodukte mit Reduktone,/endiolstruktur die im Verlauf der Mälzung hauptsächlich beim Darren entstehen, aufgrund ihrer stark reduzierenden Eigenschaften gegenüber Metallionen - im speziellen Eisenionen - die Sauerstoffaktivierung und die prooxidative wirkende Radikalgenerierung über das Fenton-/Haber-Weiss Reaktionssystem beschleunigen. Bei diesen Reaktionsmechanismen kommen den reduzierten Metallionen aufgrund ihrer aktivierenden und katalytischen Wirkung eine besondere Rolle zu, da ihre prooxidativen Eigenschaften gefördert werden und dadurch die oxidative Geschmackstabilität von Lebensmitteln bzw. Getränken stark herabsetzen [28, 29].

### 1.4.3 Chelatkomplexbildner

Auch Metallkomplexbildner können als indirekte Antioxidantien fungieren, weil sie durch die Bildung von Metallchelaten metallische Katalysatoren wie Eisen oder Kupfer binden, so dass diese nicht mehr zur Sauerstoffaktivierung über das Fenton-Reaktionssystem oder die Haber-Weiss-Reaktion zur Verfügung stehen. Dazu gehören z.B. auch die Polyphenole. Nach Bamforth et al. [2] kommen im Malz weitere chelatkomplexbildende Substanzen vor. Zum Beispiel sagt man der Aminosäure Glycin, sowie auch der Phytinsäure, als substantieller Bestandteil im Malz, eine gute Affinität zu Kupferionen nach. Ebenso sind einige Melanoidine in der Lage Metallionen als Chelatkomplex zu binden [2, 15].

### 1.4.4 Reduzierung von prooxidativ wirkenden Metallionen - Erfindung

Zur Herabsetzung der prooxidativ wirkenden Metallionenkonzentrationen (insbesondere Eisen) im Brauprozess werden heutzutage in vielen Brauereien Ionenaustauscher bei der Brauwasseraufbereitung eingesetzt. Des Weiteren wird versucht den Eiseneintrag durch die Rohstoffe (Malz, hopfen) und bei der Bierfiltration durch das Filterhilfsmittel Kieselgur möglichst gering zu halten. Es gehörte zum Stand der Technik bei der Bierfiltration möglichst eisenarme Kieselguren zu verwenden oder durch alternative Filtrationsmethoden wie z.B. Membranfiltration, Crosspure®-Filtration den Eiseneintrag bei der herabzusetzen. Zusätzlich wurden neue Filterhilfsmittel wie z.B. Divergan-HM® entwickelt die in Lage sind gelöste Eisenionen zu binden. Neben den nachgewiesenen negativen Produkteigenschaften wie z.B. eine pH-Wert-Erhöhung bei Divergan-HM® Einsatz sind insbesondere die relativ hohen Kosten bei den alternativen Filtrationsmethoden hervorzuheben.

Während die mittlerweile vielzähligen Möglichkeiten der Reduzierung des Metallioneneintrags durch die Filtration erst zum Ende des Brauprozesses einsetzen ist der Metallioneneintrag durch die Rohstoffe im gesamten Brauprozess prooxidativ wirksam.

Trotz dem heutigen Einsatz von metallionenreduzierten Pflanzenschutzmittel ist der Metallionengehalt der Rohstoffe und deren Eintrag im Brauprozess stark von Düngung und regionalen Bodengegebenheiten abhängig. Für die Landwirtschaft bestehen daher nur begrenzte Möglichkeiten den Metallionengehalt in den Rohstoffen Malz und Hopfen zu beeinflussen respektive herabzusetzen.

### 1.5 Ergebnisse

In den Laboratorien und der Forschungsbrauerei des Fachbereichs Brauwesen wurden diverse Untersuchungen zum Eintrag von Schallwellen im Mälzungsprozess mittels eines Zementrüttlers durchgeführt. Hierbei wurden die Verhaltensweisen von zwei Gersten untersucht, wobei bei einer Gerste (Marthe 2009) nur in der ersten Nassweiche und bei der anderen Gerste (Tipple 2010) in beiden Nassweichen eine Schallfrequenz von 200 Hz eingetragen wurde. Im Vergleich wurde jeweils eine Kontrollweiche ohne Rütteln durchgeführt. Geweicht wurde in Fermentern mit 3,2 kg Gerste und 9,2 L auf 19°C temperiertes Wasser. Im Anschluss an die Nassweiche wurde das Weichgut in eine Schmidt-Seeger-Pilotmälzerei für die weitere Vermälzung verbracht, wobei der Gerste Tipple zwischenzeitlich für die 2. Nassweiche, gerüttelt bzw. ungerüttelt, wieder entnommen worden ist. Das Rütteln wurde in der 1. dreistündigen Nassweiche halbstündlich und in der 2. dreistündigen Nassweiche erst nach 1,5 Stunden halbstündlich erst zu- und dann wieder abgeschaltet. In der 2. Nassweiche wurde erst später gerüttelt, um der Gerste die Möglichkeit zu geben den für ein gutes Ankeimen notwendigen gelöste Sauerstoff aufzunehmen [30, 31], da durch das Rütteln die vorhandenen gelösten Gase ausgetrieben werden [33].

Bei den resultierenden Weichwässern stand die Analytik des Eisengehaltes und der CSB-Werte (nach Fa. Hach) im Vordergrund. Die eingesetzten Gersten wurden im Hinblick auf die Wasseraufnahme, die Ankeimung sowie ihre Keimenergie untersucht und im Anschluss an die Mälzung die Qualität der Malze anhand konventioneller Malzanalysen gegenübergestellt. Zusätzlich wurden die Eisengehalte in den Malzen und den produzierten Bierwürzen bestimmt und auf ihre oxidativen Eigenschaften mittels Elektronenspin-Resonanz-Spektroskopie (ESR) untersucht [11, 34].

### 1.5.1 Weichwasseranalysen (CSB und Eisen)

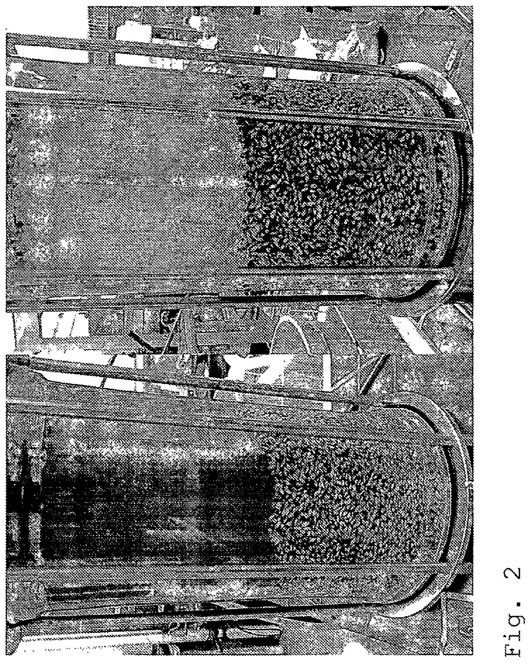

Zur Veranschaulichung der Einflüsse von Schallwellen (20 - 200 Hz) auf die Weichwässer sind in Figur 2 die Weichwasserüberstände in den Fermenten zum Ende des Weichens gegenübergestellt.

Die Ergebnisse der CSB-Bestimmungen der Weichwässer sind in der Tabelle 1 zusammengefasst.

**Tabelle 1: CSB-Analysen der Weichwässer**

| Gerste | Versuch | nach 2-stündiger Luftrast nach der: | Mittelwert [mg/L] | theoretische Gesamtbelastung CSB [mg/L] |
|---|---|---|---|---|
| Marthe | unbeschallt | 1. Nassweiche | 1180 | |
| | beschallt | 1. Nassweiche | 1828 | |
| Tipple | unbeschallt | 1. Nassweiche | 1342 | |
| | beschallt | 1. Nassweiche | 2148 | |
| | unbeschallt | 2. Nassweiche | 507 | **1849** |
| | beschallt | 2. Nassweiche | 1216 | **3364** |

Die CSB-Analysen zeigten auf, dass Gerste Marthe mit der geringeren Belastung im Weichwasser etwas sauberer war. Generell verursachen die Schallwellen eine Mehrverschmutzung des Weichwassers und damit eine gesteigerte Reinigung der Gerste um 34 - 37 % bei der ersten Nassweiche. Bei der zweiten Nassweiche (nur Tipple) war trotz vorheriger ergiebigerer Reinigung wieder mehr Verschmutzung beim gerüttelten Versuch. Betrachtet man die gesamte Verschmutzung beider Weichwässer, zeigt sich, dass bei der zweifach gerüttelten Weiche im Vergleich zur Referenz fast doppelt so viel Dreck von der Gerste entfernt wurde.

Bei der Eisenmessungen der Weichwässer von der Gerste Tipple in Tabelle 2 ergaben sich noch drastischere Unterschiede:

**Tabelle 2: Vergleich der Eisengehalte der Weichwässer der Gerste Tipple**

| Probe | Eisen im Weichwasser [mg/L] | Gesamt [mg/L] | Eisen im Weichwasser (abzüglich Eisen aus dem Wasser) [mg] | Eiseneintrag [mg Eisen pro kg Gerste] |
|---|---|---|---|---|
| 1. NW unbeschallt | 0,255 | | | |
| 2. NW unbeschallt | 0,064 | 0,319 | 2,5 | **0,79** |
| 1. NW beschallt | 2,13 | | | |
| 2. NW beschallt | 0,858 | 2,988 | 27,1 | **84,6** |
| Wasser (ohne Gerste beschallt) | 0,044 | | | |

Der Eiseneintrag ins Weichwasser konnte eindeutig auf die Gerste zurückgeführt werden, weil im Blindversuch ohne Gerste gegenüber den Eisengehalten im verwendeten Leitungswasser (</= 0,03 mg/L) kaum Eisen eingetragen worden ist. Die Analyse der Weichwässer der Gerste Tipple zeigen deutlich auf, dass durch den Einsatz von Schallwellen etwa der zehnfache Eisengehalt aus der Gerste gewaschen wurde.

### 1.5.2 Wasseraufnahme

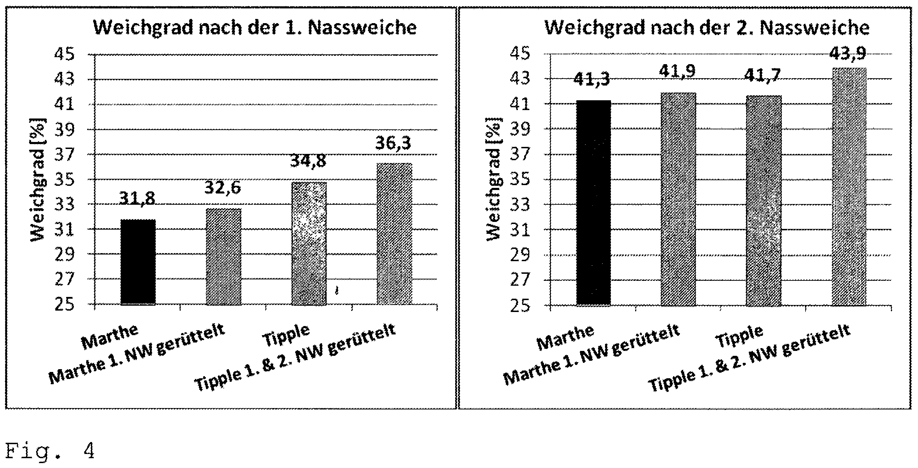

Mittels Wiegemethode wurden die Wassergehalte zwei Stunden nach den Nassweichen ermittelt. Die Ergebnisse sind in der Figur 4 zusammengefasst.

Durch den Einsatz von Schallwellen konnte die Wasseraufnahme gesteigert werden. Die Wassergehalte (Weichgrade) waren nach der ersten Nassweiche um 0,8 - 1,5 % und nach der 2. Nassweiche (nur bei Tipple) um 2 % erhöht. Auf Basis der Ergebnisse der Wasseraufnahme kann der beschallten Gerste ein besseres Ankeimverhalten und eine bessere Malzlösung unterstellt werden.

### 1.5.3 Ankeimung

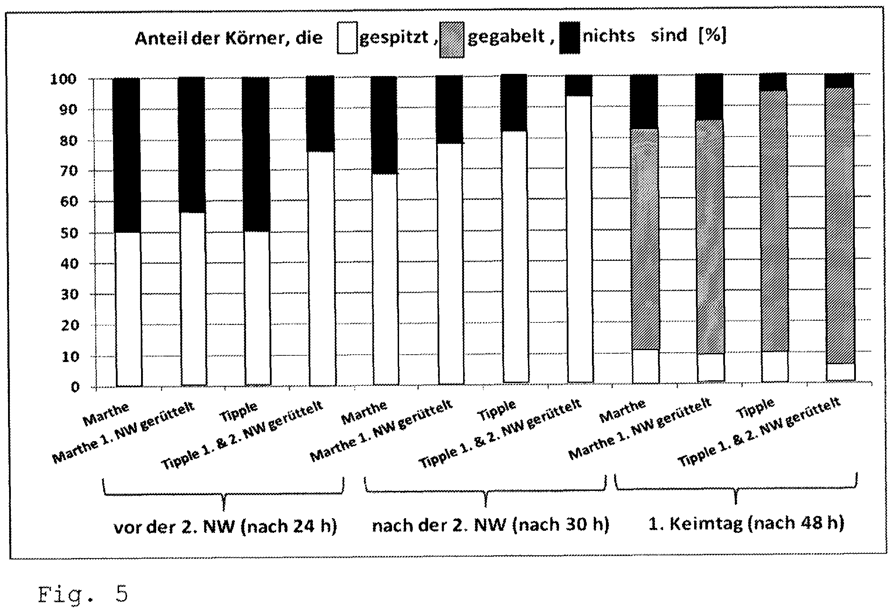

Zur Überprüfung der Ankeimgeschwindigkeit wurden nach 24, 30 und 48 Stunden die Anteile der gespitzten - das heißt ein Wurzelkeim wird sichtbar - , die gegabelten - das heißt zwei Wurzelkeime werden sichtbar - und die nicht gekeimten Anteile der Gerstenkörner ausgezählt. Die Ergebnisse sind in der Figur 5 dargestellt.

Durch den Einsatz von Schallwellen beim Weichen konnte die Ankeimung bei beiden Gersten deutlich beschleunigt werden. Dies ist ein Hinweis auf eine zu erwartende bessere Lösung der Malze bzw. die Möglichkeit einer Keimzeitverkürzung. Basierend auf einem gleichmäßigeren Einsetzen der Keimung konnte zusätzlich eine höhere Homogenität bei den beschallten Malzen aufgezeigt werden.

### 1.5.4 Malzanalysen

Anhand der durchgeführten Malzanalysen konnte trotz schnellerer Ankeimung keine signifikante Steigerung der Malzqualität aufgezeigt werden. Die beiden Vergleichsmalze unterscheiden sich lediglich in der Farbe und Kochfarbe, wobei die beschallten Malze eine geringere Farbe aufweisen. Die niedrigeren Kochfarbwerte geben einen ersten Hinweis auf eine höhere oxidative Würzestabilität, die letztendlich zu einer höheren oxidativen Stabilität der Biere führen sollte. Allerdings waren bei den durchgeführten Untersuchungen der beschallten Malze die Enzymaktivitäten der Protease und β-Glukanase geringer als bei den unbeschallten Malzen. Aus der Gesamtbetrachtung der Analysenergebnisse erscheint es wahrscheinlich, dass sich die negativen Effekte der Schallwellen auf die Enzymaktivitäten und der positive Effekt auf die Ankeimung im fertigen Malz aufheben, so dass sich die resultierende Malzqualität bisher nicht signifikant unterscheidet. Die Ergebnisse geben aber auch erste Hinweise darauf, dass es Mittels einer Optimierung der Schallwellenfrequenz, der Dauer und des genauen Zeitpunktes möglich sein wird die Malzlösung und allgemeine Malzqualität zu steigern. Aufgrund des Schwerpunkts bei den Einflüssen zur Verbesserung der oxidativen Bierstabilität wurde auf die Darstellung der Ergebnisse der allgemeinen Malzanalysen verzichtet.

### 1.5.5 Mikrobiologische Belastung der Malze

Die fertigen Malze wurden zusätzlich auf ihre mikrobiologische Belastung hin untersucht. Dazu wurden die Gesamtkeimzahlen mittels Würze und Standard 1-Agar, die Belastung mit coliformen Keimen mit einem Chromocult-Agar und die Schimmelpilzbelastung mittels CPD-Agar bestimmt. Anhand der im Folgenden dargestellten Diagramme lässt sich erkennen, dass der starke Reinigungseffekt , der durch die CSB-Bestimmungen bereits dargestellt wurde, bei der stärker belasteten Gerste Tipple zu einer deutlichen Reduzierung der Keimbelastung führte. Hierbei scheint entweder die Schallwellenanwendung während der zweiten Nassweiche deutlich effektiver zu sein oder die von vorne herein geringer Belastung der Gerste Marthe konnte durch das Weichen nicht mehr signifikant reduziert werden, so dass sich die Belastung durch das Wachstum der Mikroorganismen während der Keimung wieder angeglichen hat. Dennoch konnte bei der Untersuchung der Schimmelbelastung der Gerste Marthe ebenfalls eine signifikante Reduzierung aufgezeigt werden. Der stärkere Reinigungseffekt und die damit verbundene Herabsetzung der mikrobiellen Belastung kann als positiver Einfluss der Schallwellenbehandlung eingestuft und hervorgehoben werden.

### 1.5.6 Eisenmessungen (Gerste, Malz und Würze)

Bei den Versuchen unter Einsatz von Schallwellen in der Nassweiche konnte im Vergleich zur Referenzprobe und dem ausschließlichen Einsatz des Rüttlers ohne Gerste ein erheblicher Eiseneintrag ins Weichwasser nachgewiesen werden, so dass eine entsprechende Verringerung des Eisengehaltes in der beschallten Gerste zu erwarten ist. Zur Verifizierung der vermuteten Gegebenheit wurden die Gerste Tipple und die mit und ohne Schallanwendung resultierenden Malze aufgeschlossen und der Gesamteisengehalt bestimmt. In Tabelle 3 sind die entsprechenden Eisengehalte gegenübergestellt.

**Tabelle 3: Berechnung und Vergleich der Eisengehalte in der Gerste und den Malzen**

| | **Eisengehalt (tatsächlich) [mg/kg]** | **Eisengehalt in der Trs. (tatsächlich) [mg/kg]** | **Eisengehalt in der Malz-Trs. mit Berücksichtigung des Mälzungsschwandes (tatsächlich) [mg/kg]** | **Auswaschen durch das Weichen (tatsächlich) [%]** | **Eisengehalt in der Malz-Trs. (theoretisch) [mg/kg]** | **Auswasehen (Trs.) (theoretisch) [%]** |
|---|---|---|---|---|---|---|
| **Gerste Tipple** | 44 | 50,9 | **50,9** | - | 50,9 | - |
| **Malz Tipple ohne Rüttler** | **48,4** | 51,0 | **47,1** | **7,4** | 46,2 | 9,2 |
| **Malz Tipple mit Rüttler** | **40,8** | 43,0 | **39,6** | **22,2** | 38,0 | 25,3 |
| **Differenz [%]** | **18,8** | **18,6** | | **14,9** | | **16,1** |

Anhand der Ergebnisse konnte ein deutliches Auswaschen des Eisens durch Schallwelleneinsatz in der Nassweiche nachgewiesen werden. Zur Berücksichtigung der unterschiedlichen Wassergehalte in Gerste und Malz wurden die analysierten Eisengehalte zunächst auf die Trockensubstanz der Proben berechnet. Im Weiteren war es notwendig den Gewichtsverlust durch den Mälzungsschwand zu berücksichtigen, um die Werte vergleichen zu können bzw. ein prozentuales Auswaschen berechnen zu können. Aus der Differenz der Eisengehalte beider Malze ergab sich rechnerisch eine zusätzliche Eisengehaltsreduzierung von etwa 15 %. Anwendungsrelevant betrachtet ist der Vergleich der beiden Malze, wobei eine Verringerung des Eisengehaltes durch die Schallwellen um die 18,8 % bezogen auf das Malz und 18,6 % bezogen auf die Malz-Trockensubstanz aufgezeigt werden konnte.

Zusätzlich wurden die Eisengehalte der Malzproben theoretisch mittels der Werte zum Eiseneintrag in die Weichwässer (siehe Tab. 2) berechnet. Hierbei mussten die Differenz des Eisengehaltes der Gerste und des Eintrags in das Weichwasser gebildet, wie bei der "tatsächlichen" Betrachtung im Nachhinein auf die Trockensubstanz bezogen und die Werte ebenfalls um den Mälzungsschwand korrigiert werden. Es ergab sich eine theoretische Reduzierung des Eisengehaltes um etwa 16 %. Damit konnte eine Kontrollrechnung aufgestellt werden, die das tatsächlich über die Eisenbestimmung in den Malzen ermittelte Ergebnis bestätigt hat.

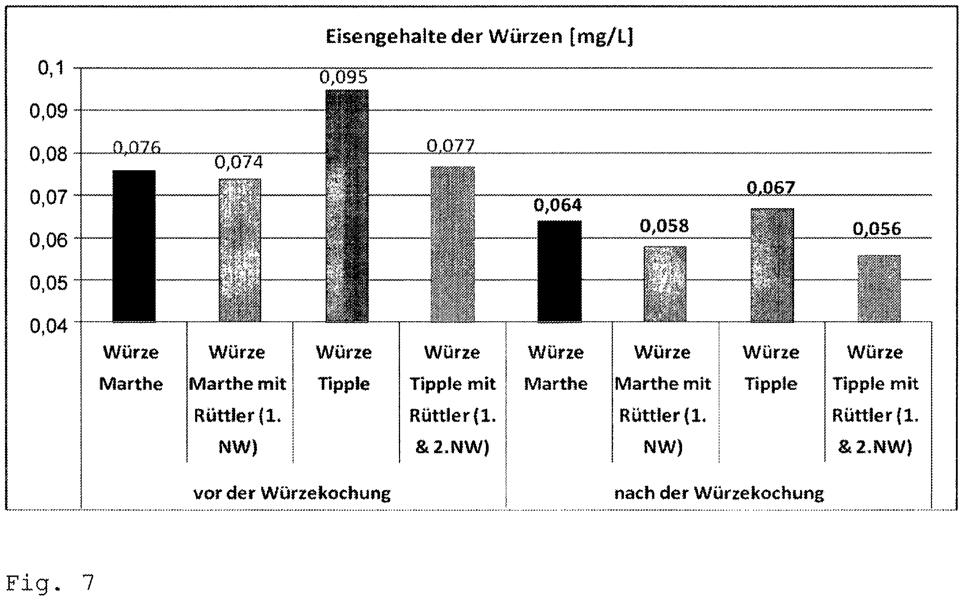

Aufgrund der großen Relevanz der Eisengehalte in Getränken bezüglich der Geschmackstabilität wurden aus den Malzen beider Gersten Würzen hergestellt und auf ihren Eisengehalt hin untersucht. Die Ergebnisse sind in der Figur 7 dargestellt.

Die Eisengehalte sind aufgrund der Ausfällung von Eiweiß generell vor der Würzekochung etwas höher, da Eisen teilweise mit dem Eiweiß entfernt wird. Beim Vergleich der Eisengehalte der gekochten Würzen finden sich bei dem Versuch Marthe 9,4 % und beim Versuch Tipple, bei dem in beiden Nassweichen beschallt worden ist, 16,4 % weniger Eisen wieder. Letztere Differenz stimmt demnach auch annähernd mit der in den Tipple-Malzen ermittelten Eisengehalts-Differenz von 14,9 % überein, so dass hiermit ein weiterer Hinweis auf die enorme Reduzierung des Eisengehaltes gegeben ist.

### 1.5.7 Oxidative Stabilität mittels ESR-Messungen

Aufgrund der unterschiedlichen Eisengehalte der aus den beschallten und unbeschallten Malzen produzierten Würzen wird eine Verbesserung der oxidativen Geschmacksstabilität erwartet.

### 1.6 Zusammenfassung

Generell verursachen die Schallwellen eine Mehrverschmutzung des Weichwassers und damit eine gesteigerte Reinigung der Gerste um 34 - 37 % bei der ersten Nassweiche. Beim wiederholten Einsatz von Schallwellen in der zweiten Nassweiche kann die Reinigung auf bis zu 50 % gesteigert werden.

Dies konnte mit den mikrobiologischen Untersuchungen bestätigt werden. Durch zwei beschallte Nassweichen konnten die Keime (Bakterien und Schimmelpilze) auf dem fertigen Malz um etwa 50 % reduziert werden.

Außerdem konnte um etwa 15 % mehr Eisen aus der Gerste "gewaschen" werden, was nachweislich zu einer gleichwertigen Reduzierung des Eisengehaltes in aus den Malzen produzierten Würzen führte. Technologisch betrachtet ist der Vorteil eines geringeren Eisengehaltes in Getränken eine erhöhte oxidative Geschmackstabilität. Dies wird im Späteren mittels ESR-Messungen untersucht. Ein zusätzlicher Vorteil der Eisenreduzierung könnte in Zukunft bei der Produktion von dunklen Malzen zum Tragen kommen. Bei Röstprozessen von Gersten und Malzen kommt es nach eigenen neusten Untersuchungen zu einer Freisetzung von Eisen, das zu einem erheblichen Nachteil beim Einsatz von dunklen Malzen bezüglich der oxidativen Geschmackstabilität führt. Der Einsatz von Schallwellen könnte damit nicht nur für die Produktion von normalem Malz, sondern auch insbesondere für die Produktion von Spezialmalzen z.B. Farbmalz zum Einsatz kommen.

Anhand der Prozesskontrolle während der Mälzung konnte eine um 2 % höhere Wasseraufnahme bei den beschallten Gersten aufgezeigt werden. Eine geringere mikrobiologische Belastung und der höhere Wassergehalt führten zu einer schnelleren und homogeneren Ankeimung der Gerste, die jedoch nicht anhand von Malzanalysen bestätigt werden konnte. Die Beschallung resultierte im fertigen Malz zu keinen signifikanten Verbesserungen in der Malzqualität. In weitergehenden Untersuchungen soll das Verfahren in Zukunft weiter optimiert werden.

### B) Zweites Ausführungsbeispiel der Erfindung:

Auch bei dem zweiten Ausführungsbeispiel der Erfindung geht es um den Einsatz von Schallwellen mittels Zementrüttler bzw. eines Innenvibrators im Mälzungsprozess zur Verbesserung der Malzqualität.

### Einsatz von Schallwellen zur Verbesserung der Malzqualität

Es ist hinreichend bekannt, dass die eingesetzten Rohstoffe Malz, Hopfen und Brauwasser einen entscheidenden Einfluss auf die sich ergebende Qualität eines Bieres haben. Die für ein Bier qualitätsentscheidenden Malzmerkmale werden wesentlich durch den Mälzungsprozess bestimmt. Daher ist es wichtig bestimmte Mälzungsparameter einzuhalten und die Malzqualität zu überprüfen.

### 1 Herstellung des Malzes

Der Mälzungsprozess kann in drei Prozessabschnitte unterteilt werden, das Weichen, Keimen und Darren. Beim Weichen wird eine schnelle und homogene Wasseraufnahme der Gerste angestrebt und die Keimung der Gerste eingeleitet. Dazu wird die so genannte Weiche (Weichgefäß) zwei bis dreimal für einige Stunden geflutet (Nassweiche). Zwischen den Nassweichen wird die Gerste ausgiebig belüftet (Luftrast), um eine ausreichende Sauerstoffversorgung der Gerste zu gewährleisten und das durch die Keimung entstehende Kohlendioxid abzuführen. Die durch das Weichen hervorgerufene Wasseraufnahme der Gerste wird im Wesentlichen durch den Luftdurchsatz während der Luftrast und die Temperaturen des Weichwassers bzw. der Luft (10 - 17°C) bestimmt. Ebenso ist das Verhältnis der Nassweiche- zur Luftrastdauer (z.B. 1:2,5 - 1:4,5) für die Wasseraufnahme von entscheidender Bedeutung (z.B. 4 h NW / 20 h LR / 3 h NW). Ist ein Weichgrad von 36 - 38 % erreicht wird das Keimgut entweder nass oder trocken in den Keimkasten ausgeweicht und auf der Horde bis zu einer Höhe von 1 - 1,30 m mittels Schneckenwendern verteilt. Zur Einstellung des angestrebten Weichgrades von 40 - 48 % wird das so genannte Grünmalz in den ersten zwei Keimtagen mit Wasser besprüht.

Ziele des Keimens sind möglichst hohe Enzymaktivitäten zu entwickeln, den Extrakt durch den Abbau der Hüllsubstanzen der Stärkekörner (Gummistoffe) freizulegen und einen definierten Eiweißabbau zu erreichen. Dabei soll das Wachstum möglichst gering gehalten werden, um möglichst wenig Extraktverluste zu haben.

Im Allgemeinen führt ein höherer Weichgrad zu gesteigerten Enzymaktivitäten, wodurch eine bessere cytolytische Lösung (Zellwandlösung) und eine verstärkter Eiweißabbau in der Gerste bzw. im Malz erreicht wird. Dadurch werden die Keimungsvorgänge beschleunigt, was sich in einem erhöhten Mälzungsschwand widerspiegelt. Entsprechend kann durch höhere Weichgrade die Keimdauer verkürzt werden [29].

Die Keimdauer liegt normalerweise zwischen 4 und 7 Keimtagen. Die Festlegung der Keimdauer ist ein Kompromiss zwischen der angestrebten Malzqualität und der Minimierung der Produktionskosten und Mälzungsschwände durch das Wachstum. Während der Keimung muss das Grünmalz mit temperierter und 100 % befeuchteter Luft belüftet werden, um eine ausreichende Sauerstoffversorgung bzw. Kohlendioxidentfernung zu gewährleisten und die durch Atmung entstehende Wärme abzuleiten. Zur Unterstützung der Belüftung und zur Vermeidung von Klumpenbildung durch das Zusammenwachsen der Wurzelkeime wird das Keimgut anfangs einmal und ab dem dritten Keimtag dreimal täglich mit Hilfe von Schneckenwendern gewendet. Die Parameter der Keimung sind die Temperatur des Keimgutes, die Keimdauer, der Weichgrad des Grünmalzes, die Häufigkeit des Wendens, der Luftdurchsatz und der definierte Anteil der Rückluft zur Anreicherung des CO₂-Gehaltes im Keimgut. Mittels der Anreicherung des CO₂-Gehaltes in der Zuluft kann das Wachstum zum vorgesehenen Ende der Keimung gehemmt werden. Zum Abbruch der Keimung und um das Malz haltbar zu machen ist ein zusätzlicher Trocknungsschritt, das Darren, erforderlich. Das Darren kann in zwei Phasen unterteilt werden. In der ersten Phase, der Schwelkphase, wird das Grünmalz zur Schonung der Enzyme bei niedrigen Temperaturen (50 - 65°C) bis zu einem Wassergehalt von 10 - 14 % vorgetrocknet. Sobald die Temperatur der Abluft über dem Keimgut ansteigt ("Durchbruch"), wird die Temperatur der Zuluft abhängig vom Malztyp auf 80 - 110°C erhöht und das Malz bei erreichter Abdarrtemperatur für 3 - 5 Stunden abgedarrt. Während der Darrphase werden verschiedenste Aroma- und Farbkomponenten durch Stoffumwandlungen (Maillard-Reaktionen, Karamellisierung etc.) gebildet, die Enzyme vorübergehend inaktiviert und der Wassergehalt auf 4 - 5 % gesenkt. Zu den Darrparametern gehören die Höhe der Schwelk- und Abdarrtemperaturen, der Temperaturverlauf, der Luftdurchsatz und das Verhältnis der Zu- und Umluft. Damit die Mälzereien mit möglichst wenig Energie- und Wasserverbrauch gute Malze bei kurzen Belegungszeiten der Betriebsanlagen herstellen können, ist die Technologie des Mälzens ist im Laufe der Jahrzehnte weitestgehend optimiert worden. Dadurch war es möglich die steigenden Qualitätsansprüche der Brauereien erfüllen können [12, 20].

### 1.1 Einfluss des Sauerstoffgehaltes beim Mälzens auf die Malzqualität

Generell findet man in der Literatur, dass eine Belüftung beim Weichen sowohl in den Nassweichen als auch in den Luftrasten zu einer schnelleren Ankeimung und aber nach der Keimung nur geringfügig zu einer höheren Malzlösung führt. [30 ,31, 32]

Nach Kretschmer et al. [10] bewirkt eine Sauerstoffreduzierung beim Keimen (Zuluft mit Luft, Stickstoff oder reinem Sauerstoff) neben der Reduzierung des Mälzungsschwandes, dem Absenken des Eiweißlösungsgrades, ein Ansteigen der Rohfettgehalte bei gleichzeitiger Erhöhung der LOX-Aktivitäten und eine Verbesserung der Geschmacksstabilität der Biere. Eine Sauerstoffreduzierung beim Schwelken bewirkt neben einer Erhöhung der VZ 45°C hellere Würzefarben.

### 2 Aktivierung von Sauerstoff

Beim Mälzungsprozess, z.B. beim Belüften des Weichgutes und den hohen Luftdurchsatz beim Keimen und Darren, wird das Produkt ständig mit viel molekularem Sauerstoff umströmt. Viele der während des Mälzens stattfindenden Oxidationsprozesse werden durch aktivierte Sauerstoffformen initiiert. D.h. der relativ stabile molekulare Sauerstoff muss erst aktiviert werden, bevor er mit Malzinhaltstoffen reagieren kann. Diese Aktivierung ist temperaturabhängig und erfolgt über verschiedene Zwischenstufen bis hin zum sehr reaktiven Hydroxylradikal, wobei diese Zwischenstufen selbst ebenfalls schon reaktiv sind. Man spricht von den so genannten Reactive Oxygen Species (ROS: O₂^{●}, O₂², HO₂⁻, H₂O₂). [1, 3, 11, 15, 27]. Das bei der Sauerstoffaktivierung gebildete Wasserstoffperoxid H₂O₂ wird durch im Malz und Weichwasser vorhandene Metallionen (z.B. Fe²⁺, Fe³⁺, Cu⁺) katalytisiert in ein Hydroxylion und ein sehr reaktives Hydroxylradikal gespalten, das unspezifisch mit Malzinhaltsstoffen wie organische Säuren, Proteine, phenolische Verbindungen etc. reagiert [10, 13, 14]. In Figur 1 sind die beiden Mechanismen der Fenton- und Haber-Weiss-Reaktion, die für die katalytischen Reaktionen verantwortlich sind, dargestellt [9].

### 2.1 Enzyme zum Schutz vor aktivierten Sauerstoff

Für den Schutz vor aktivierten Sauerstoffspezies sind in Getreide mehrere Enzyme vorhanden. Die Wichtigsten sind im Folgenden aufgelistet: Superoxiddismutase (SOD) [7, 22], Katalase [2, 7, 23], Peroxidase [20, 21, 22], Polyphenoloxidase [2, 32, 36], Lipoxygenase (LOX) [1, 16, 17, 18, 19 24, 25].

### Antioxidative Gersten- und Malzinhaltsstoffe

Des Weiteren sind in Gerste bereits viele antioxidativ wirkende Substanzen, wie Polyphenole [2, 6, 8], Gluthathion [2], Vitamine z.B. Ascorbinsäure und Vitamin E [2], etc. vorhanden. Weitere entstehen während des Mälzungsprozesses z.B. durch die Maillardreaktionen [26].

Nach Bright et al. [3] kann ein Antioxidans generell als Substanz, die oxidative Reaktionen inhibiert, definiert werden. Antioxidantien haben verschiedenste Wirkungsweisen. Sie fangen molekularen Sauerstoff oder aktivierte Sauerstoffspezies ab, wirken als Reduktionsmittel durch Abgabe von Protonen, die direkt mit Sauerstoff reagieren, oder binden katalytisch wirkende Metallionen durch Chelatbildung [5, 15].

### 2.1.1 Polyphenole

Ein Großteil (∼ 80 %) der Polyphenole im Bier stammen aus dem Malz. Sie sind nach Goupy et al. [13, 14] bekannt für ihre reduzierende Wirkung, das Verhindern der Autoxidation durch die Reaktion mit Peroxyradikalen und die Bindung von prooxidativ wirkenden Metallionen. Phenolsäuren und Flavonoide sind nach Bamforth et al. [2] in der Lage aufgrund ihres konjugierten Doppelbindungssystems durch Elektronenabgabe bestimmte Verbindungen zu reduzieren und effektiv Singulettsauerstoff, Superoxidanionen und Hydroxylradikale abzufangen. Außerdem sind sie Substrat für die Polyphenoloxidasen und Peroxidasen und somit auch indirekt an der enzymatischen Verhinderung der Radikalbildung beteiligt [2, 6, 8].

Nach Woffenden et al. [26] kondensiert ein Teil der oxidierten Polyphenole durch die hohen Temperaturen beim Darren, was zu einer höheren antioxidativen Aktivität durch eine erleichterte Fähigkeit der Moleküle zur Protonenabspaltung und zu einer vermehrten Bindung von Metallionen führt.

### 2.1.2 Melanoidine und Reduktone

Melanoidine und Reduktone sind antioxidativ wirkende Produkte der Maillard-Reaktion (Nicht-Enzymatische Bräunungsreaktion), die besonders bei hohen Temperaturen während des Darrprozesses und der Würzekochung im Brauprozess entstehen. Die Parameter Wassergehalt beim Darren, Darrtemperatur und -dauer, etc. haben einen direkten Einfluss auf die durch die Maillard-Reaktion entstehenden reduzierenden Substanzen [12]. Maillard-Reaktionen sind Reaktionen von einfachen Zuckern mit Aminosäuren oder kleinen Peptiden zu N-Substituierten Glycosylaminen, die zu Amadori- oder Heyns-Produkten umgelagert werden. Die letztgenannten Produkte bilden die Ausgangssubstanzen für eine Reihe von weiteren Reaktionen, die zu Farbpigmenten (Melanoidine), Reduktonen, Carbonylverbindungen, Röstaromen etc. führen [5, 15].

Wolffenden et al. [26] und Coghe et al. [4] haben in ihren Untersuchungen herausgefunden, dass die Reduktions- und Radikalfängerfähigkeit der Reduktone und Melanoidine umso höher sind, je höher die Darrtemperatur und je niedriger die relative Luftfeuchtigkeit der Zuluft ist. Nach Forster [9] zeigen Dimethylhydroxyfuranone die stärkste antioxidative Aktivität, gefolgt von Oxazolen und schließlich Thiazolen.

Melanoidine sind in der Lage die Sauerstoffspezies Superoxidanion, Peroxidanion, und Hydroxylradikale und Peroxylradikale (ROO^{●}) abzufangen [2, 15].

Neuere Untersuchungen haben jedoch aufgezeigt, dass bestimmte Maillard Intermediärprodukte mit Reduktone,/endiolstruktur die im Verlauf der Mälzung hauptsächlich beim Darren entstehen, aufgrund ihrer stark reduzierenden Eigenschaften gegenüber Metallionen - im speziellen Eisenionen - die Sauerstoffaktivierung und die prooxidative wirkende Radikalgenerierung über das Fenton-/Haber-Weiss Reaktionssystem beschleunigen. Bei diesen Reaktionsmechanismen kommen den reduzierten Metallionen aufgrund ihrer aktivierenden und katalytischen Wirkung eine besondere Rolle zu, da ihre prooxidativen Eigenschaften gefördert werden und dadurch die oxidative Geschmackstabilität von Lebensmitteln bzw. Getränken stark herabsetzen [28, 29].

### 2.1.3 Chelatkomplexbildner

Auch Metallkomplexbildner können als indirekte Antioxidantien fungieren, weil sie durch die Bildung von Metallchelaten metallische Katalysatoren wie Eisen oder Kupfer binden, so dass diese nicht mehr zur Sauerstoffaktivierung über das Fenton-Reaktionssystem oder die Haber-Weiss-Reaktion zur Verfügung stehen. Dazu gehören z.B. auch die Polyphenole. Nach Bamforth et al. [2] kommen im Malz weitere chelatkomplexbildende Substanzen vor. Zum Beispiel sagt man der Aminosäure Glycin, sowie auch der Phytinsäure, als substantieller Bestandteil im Malz, eine gute Affinität zu Kupferionen nach. Ebenso sind einige Melanoidine in der Lage Metallionen als Chelatkomplex zu binden [2, 15].

### 2.1.4 Reduzierung von prooxidativ wirkenden Metallionen - Erfindung

Zur Herabsetzung der prooxidativ wirkenden Metallionenkonzentrationen (insbesondere Eisen) im Brauprozess werden heutzutage in vielen Brauereien Ionenaustauscher bei der Brauwasseraufbereitung eingesetzt. Des Weiteren wird versucht den Eiseneintrag durch die Rohstoffe (Malz, Hopfen) und bei der Bierfiltration durch das Filterhilfsmittel Kieselgur möglichst gering zu halten. Es gehörte zum Stand der Technik bei der Bierfiltration möglichst eisenarme Kieselguren zu verwenden oder durch alternative Filtrationsmethoden wie z.B. Membranfiltration, Crosspure®-Filtration den Eiseneintrag bei der herabzusetzen. Zusätzlich wurden neue Filterhilfsmittel wie z.B. Divergan-HM® entwickelt die in Lage sind gelöste Eisenionen zu binden. Neben den nachgewiesenen negativen Produkteigenschaften wie z.B. eine pH-Wert-Erhöhung bei Divergan-HM® Einsatz sind insbesondere die relativ hohen Kosten bei den alternativen Filtrationsmethoden hervorzuheben.

Während die mittlerweile vielzähligen Möglichkeiten der Reduzierung des Metallioneneintrags durch die Filtration erst zum Ende des Brauprozesses einsetzen ist der Metallioneneintrag durch die Rohstoffe im gesamten Brauprozess prooxidativ wirksam.

Trotz dem heutigen Einsatz von metallionenreduzierten Pflanzenschutzmittel sind der Metallionengehalt der Rohstoffe und deren Eintrag im Brauprozess stark von Düngung und regionalen Bodengegebenheiten abhängig. Für die Landwirtschaft bestehen daher nur begrenzte Möglichkeiten den Metallionengehalt in den Rohstoffen Malz und Hopfen zu beeinflussen respektive herabzusetzen.

### 3 Durchführung

In den Laboratorien und der Forschungsbrauerei des Fachbereichs Brauwesen wurden diverse Untersuchungen zum Eintrag von Schallwellen im Mälzungsprozess mittels eines Zementrüttlers durchgeführt. In Vorversuche, bei denen Gerste mit Frequenzen zwischen 20 und 200 Hz beschallt wurde, konnte eine Verbesserung der Ankeimung und der Wasseraufnahme der Gerste beim Weichen ab einer Schallfrequenz von 100 Hz aufgezeigt werden (Daten nicht dargestellt).

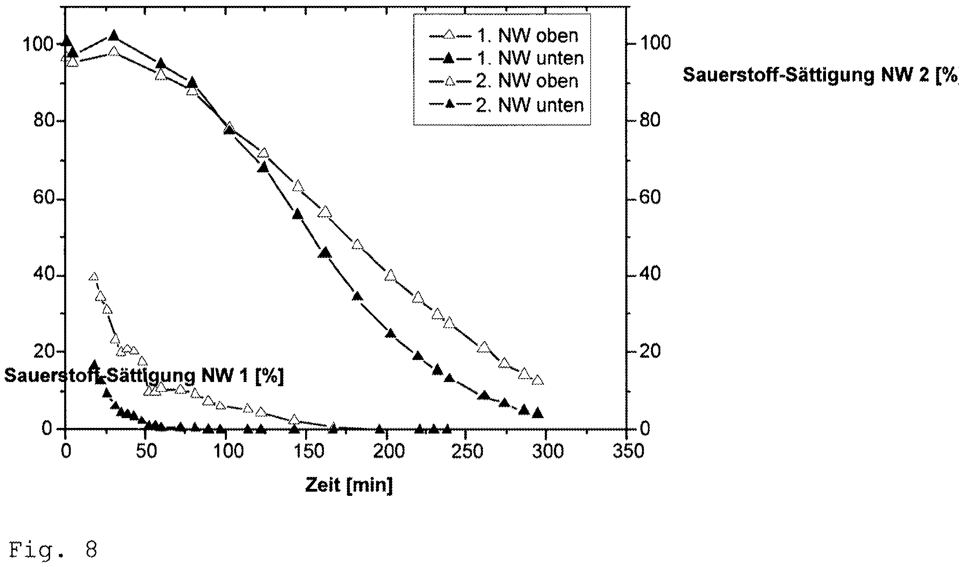

In einer Versuchsmälzung wurden die Verhaltensweisen von zwei Gersten untersucht, wobei bei einer Gerste (Marthe 2009) nur in der ersten Nassweiche und bei der anderen Gerste (Tipple 2010) in beiden Nassweichen eine Schallfrequenz von 180 Hz eingetragen wurde. Es wurde jeweils eine Kontrollweiche ohne Rütteln/Beschallung durchgeführt. Geweicht wurde in Fermentern mit 3,2 kg Gerste und 9,2 L auf 19 °C temperiertes Wasser. Im Anschluss an die erste Nassweiche wurde das Weichgut in eine Schmidt-Seeger-Pilotmälzerei für die weitere Vermälzung verbracht, wobei die Proben der Gerste Tipple zwischenzeitlich für die zweite Nassweiche, gerüttelt bzw. ungerüttelt, wieder entnommen worden ist. Hierbei war nur noch die Hälfte der anfänglich 3,2 kg Gerte im Fermenter für die zweite Nassweiche vorhanden, da die andere Hälfte vor der Luftrast verworfen wurde. In Figur 8 ist dargestellt, wie schnell der Sauerstoff während der beiden Nassweichen ohne Schallwelleneintrag grundsätzlich verbraucht wird.

Während der ersten Nassweiche ist der Sauerstoff erst nach etwa 5 Stunden nahezu vollständig verbraucht, weil sich das Korn noch im Ruhestadium befindet und noch nicht angekeimt ist. In weiteren Versuchen hat sich herausgestellt, dass auf eine Belüftung in der ersten Nassweiche verzichtet werden kann, ohne dass sich eine Verringerung der Malzqualität ergibt. Während der zweiten Nassweiche wird der Sauerstoff in unbelüfteten Weichsystemen in nahezu unter einer Stunde vollständig verbraucht, weil die Ankeimung eingesetzt hat und die Gerste damit eine deutlich gesteigerte Stoffwechselaktivität aufzeigt. Aufgrund dieser grundsätzlichen Gegebenheiten wurde die eingeweichte Gerste in der ersten Versuchsreihe unter Schallwelleneinsatz in der ersten Nassweiche (3 h) halbstündlich und in der zweiten Nassweiche (3 h) erst nach 1,5 Stunden halbstündlich beschallt. In der zweiten Nassweiche wurde erst später gerüttelt, um der Gerste die Möglichkeit zu geben den für ein gutes Ankeimen notwendigen gelösten Sauerstoff aufzunehmen [30, 31], da durch das Rütteln die vorhandenen gelösten Gase ausgetrieben werden [33].

Zur Untersuchung der Einflüsse des Schallwelleneintrags wurde in einer zweiten Versuchsreihe ausschließlich die Gerste Tipple verwendet und während der Nassweichen in einem Versuch zusätzlich belüftet, um das Ausmaß der Wascheffekte vergleichen zu können, da bei Belüftung grundsätzlich bessere Wascheffekte erreicht werden. Des Weiteren sollte überprüft werden ob bei kontinuierlicher Belüftung ein zusätzlicher Schallwelleneintrag den vorhandenen Sauerstoffgehalt im Weichwasser signifikant beeinflusst. Der Rüttler wurde hier auf die maximal mögliche Frequenz von 200 Hz anstatt 180 Hz eingestellt und jeweils nur für 10 min pro 30 min gerüttelt. Bei Belüftung der Nassweiche wurde auch in der zweiten Nassweiche von Anfang an gerüttelt, da nicht mit einem Austreiben des Sauerstoffes im Weichwasser gerechnet werden musste. Außerdem wurde auf die zwischenzeitliche Einbringung der Proben in die Kleinmälzung verzichtet, damit in dieser Versuchsreihe die anfänglichen 3,2 kg Gerste in dem Fermenter ein zweites Mal geweicht und somit das Gerste-Wasser-Verhältnis konstant gehalten werden konnte.

Bei den resultierenden Weichwässern stand die Analytik der Eisengehalte und der CSB-Werte (nach Fa. Hach) im Vordergrund. Die eingesetzten Gersten wurden im Hinblick auf die Wasseraufnahme, die Ankeimung sowie ihre Keimenergie untersucht und im Anschluss an die Mälzung die Qualität der Malze anhand konventioneller Malzanalysen gegenübergestellt. Bei den Versuchen unter Belüftung der Nassweichen wurden aus den Malzen produzierten Bierwürzen zusätzlich auf ihre oxidativen Eigenschaften mittels Elektronenspin-Resonanz-Spektroskopie (ESR) untersucht [11, 34].

### 4 Ergebnisse

### 4.1 Weichwasseranalysen (CSB und Eisen)

### 4.1.1 CSB der Weichwässer

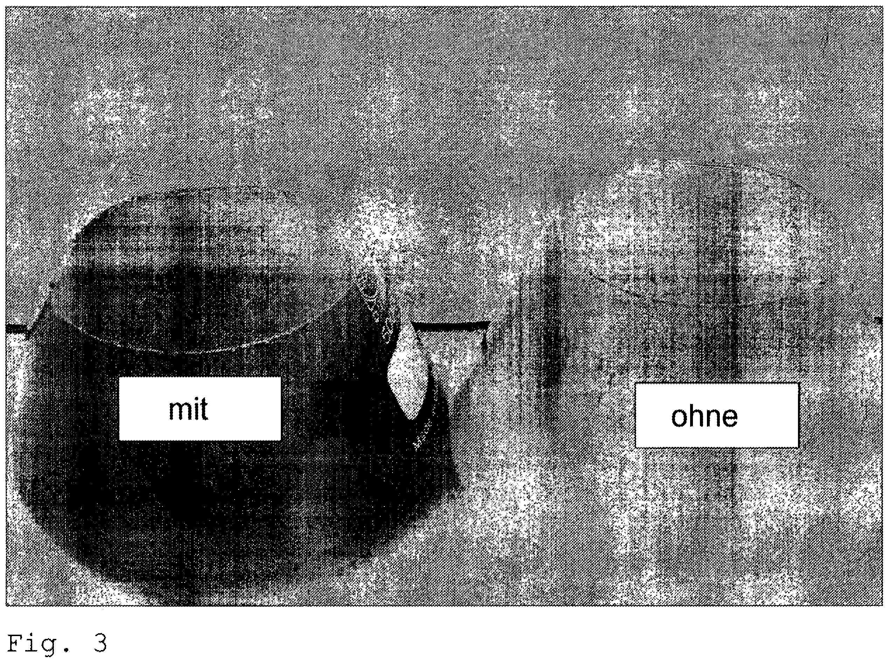

Zur Veranschaulichung der Einflüsse von Schallwellen (180 bzw. 200 Hz) auf die Weichwässer sind in Figur 2 und 3 die Weichwasserüberstände in den Fermenten zum Ende der ersten Nassweiche gegenübergestellt.

Die Ergebnisse der CSB-Bestimmungen der Weichwässer sind in der Tabelle 4 zusammengefasst. Hierbei wurden die ermittelten CSB-Werte mit drei multipliziert, weil aufgrund des Versuchsaufbaus mit einem Gerste-Wasser-Verhältnis von 1:3 gearbeitet werden musste. In industriellen Weichen ist dieses Verhältnis jedoch annähernd 1:1. Die Werte der zweiten Nassweiche wurden zusätzlich mit zwei multipliziert, da in der zweiten Nassweiche nur noch die Hälfte der in der ersten Nassweiche eingeweichten 3,2 kg geweicht wurden.

**Tabelle 4: CSB-Analysen der Weichwässer - Versuchsreihe 1**

| Gerste | Versuch | Weichwasser der | Mittelwert [mg/L] | theoretische Gesamtbelastung CSB [mg/L] |
|---|---|---|---|---|
| Marthe | unbeschallt | 1. Nassweiche | **3541** | |
| | beschallt | 1. Nassweiche | **5484** | |
| Tipple | unbeschallt | 1. Nassweiche | 4027 | |
| | beschallt | 1. Nassweiche | 6444 | |
| | unbeschallt | 2. Nassweiche | 3041 | **7068** |
| | beschallt | 2. Nassweiche | 7297 | **13741** |

Die CSB-Analysen zeigten auf, dass die Gerste Marthe mit der geringeren Belastung im Weichwasser etwas sauberer war. Generell verursachen die Schallwellen bei beiden Versuchsreihen (Tab 4 & 5) eine erhebliche Mehrverschmutzung des Weichwassers und damit eine gesteigerte Reinigung der Gerste bei der ersten Nassweiche. Bei der zweiten Nassweiche (nur Tipple) war trotz vorheriger ergiebigerer Reinigung wieder mehr Verschmutzung beim gerüttelten Versuch festzustellen. Betrachtet man die gesamte Verschmutzung beider Weichwässer, zeigt sich, dass durch die Schallwellenanwendung in beiden Nassweichen im Vergleich zur Referenz 2-3 mal so viel Dreck von der Gerste entfernt wurde. In diesem Zusammenhang sind die Werte der zweiten Versuchsreihe, bei der ein etwa dreifach höhere CSB-Werte durch den Einsatz des Rüttlers ermittelt wurde, realitätsnäher, da im Gegensatz zur ersten Versuchsreihe die gleichen Mengen an Weichgut (3,2 kg Gerste anstatt nur 1,6 kg) in der ersten und zweiten Nassweiche verwendet wurden. Außerdem konnte der grundsätzliche Zusammenhang bestätigt werden, dass eine Belüftung zu einem zusätzlichen Reinigungseffekt führt. Im Vergleich konnte jedoch bei Schallwelleneintrag ein deutlich stärkerer Wascheffekt erreicht werden.

**Tabelle 5: CSB-Analysen der Weichwässer - Versuchsreihe 2**

| Versuch | | Weichwasser der: | Mittelwert [mg/L] | (theoretisch)e Gesamtbelastung CSB [mg/L] |
|---|---|---|---|---|
| unbelüftet | ungerüttelt | 1. Nassweiche | 2725 | |
| | gerüttelt | 1. Nassweiche | 7319 | |
| | ungerüttelt | 2. Nassweiche | 3313 | **6038** |
| | gerüttelt | 2. Nassweiche | 11830 | **19149** |
| belüftet | ungerüttelt | 1. Nassweiche | 3629 | |
| | gerüttelt | 1. Nassweiche | 10888 | |
| | ungerüttelt | 2. Nassweiche | 3728 | **7357** |
| | gerüttelt | 2. Nassweiche | 12866 | **23754** |

### 4.1.2 Eisen im Weichwasser

Bei den Eisenmessungen der Weichwässer aus Versuchsreihe 1 (nur Gerste Tipple untersucht) in Tabelle 6 ergaben sich ebenso drastische Unterschiede.

**Tabelle 6: Vergleich der Eisengehalte der Weichwässer der Gerste Tipple - Versuchsreihe 1**

| Weichwasser | Eisen im Weichwasser [mg/L] | Eisen im Weichwasser (abzüglich Eisen aus dem Wasser) [mg] | Eiseneintrag ins Weichwasser [mg Eisen pro kg Gerste] | Gesamt-Eiseneintrag ins Weichwasser [mg Eisen pro kg Gerste] |
|---|---|---|---|---|
| 1. NW ohne Rüttler | 0,255 | 1,94 | 0,606 | 0,96 |
| 2. NW ohne Rüttler | 0,064 | 0,563 | 0,352 | |
| 1. NW mit Rüttler | 2,13 | 15,62 | 4,88 | 9,2 |
| 2. NW mit Rüttler | 0,858 | 6,86 | 4,29 | |
| Wasser | 0,044 | | | |

Der Eiseneintrag ins Weichwasser konnte eindeutig auf die Gerste zurückgeführt werden, weil im Blindversuch ohne Gerste gegenüber den Eisengehalten im verwendeten Leitungswasser (0,044 mg/L) kaum Eisen eingetragen worden ist. Die Analyse der Weichwässer der Gerste Tipple zeigen auf, dass durch den Einsatz von Schallwellen in Versuchsreihe 1 etwa der neunfache Eisengehalt aus der Gerste gewaschen wurde.

In der zweiten Versuchsreihe konnte ein Eiseneintrag durch die Gerste bestätigt werden. Allerdings war hier der Eiseneintrag der ungerüttelten Versuche deutlich höher als in der ersten Versuchsreihe. Damit wurde in dieser Versuchsreihe nur zweieinhalb bis dreifach mehr Eisen mit Hilfe des Rüttlers aus der Gerste gewaschen. Dies kann eventuell darauf zurückzuführen sein, dass die Gerste in Versuchsreihe 1 zwischen den beiden Nassweichen durch die Zufuhr von temperierter Luft in der Labormälzerei stärker zurückgetrocknet wurde und in Folge weniger Eisen gelöst wurde.

**Tabelle 7: Vergleich der Eisengehalte der Weichwässer der Gerste Tipple - Versuchsreihe 2**

| Weichwasser | Eisen im Weichwasser [mg/L] | Eisen im Weichwasser (abzüglich Eisen aus dem Wasser) [mg] | Eiseneintrag ins Weichwasser [mg Eisen pro kg Gerste] | Gesamt-Eiseneintrag ins Weichwasser [mg Eisen pro kg Gerste] |
|---|---|---|---|---|
| 1. NW ohne Belüftung ohne Rüttler | 0,63 | 5,30 | 1,66 | **2,9** |
| 2. NW ohne Belüftung ohne Rüttler | 0,51 | 4,01 | 1,25 | |
| 1. NW ohne Belüftung mit Rüttler | 2,37 | 21,31 | 6,66 | **10,0** |
| 2. NW ohne Belüftung mit Rüttler | 1,25 | 10,52 | 3,29 | |
| 1. NW mit Belüftung ohne Rüttler | 1,43 | 12,66 | 3,96 | **5,9** |
| 2. NW mit Belüftung ohne Rüttler | 0,775 | 6,34 | 1,98 | |
| 1. NW mit Belüftung mit Rüttler | 3,79 | 34,37 | 10,74 | **15,1** |
| 2. NW mit Belüftung mit Rüttler | 1,65 | 14,04 | 4,39 | |
| Wasser | 0,054 | | | |

### 4.2 Wasseraufnahme

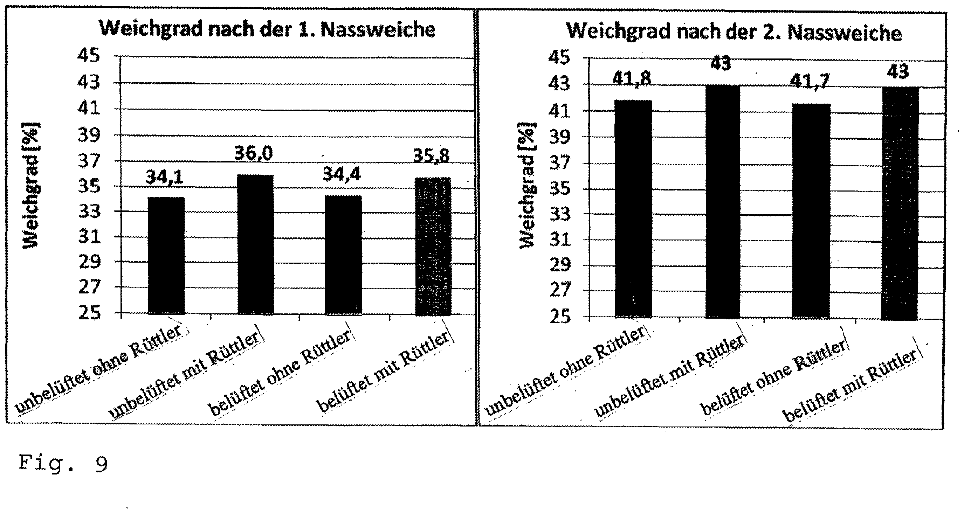

Mittels Wiegen wurden zwei Stunden nach den Nassweichen die Wassergehalte ermittelt. Die Ergebnisse sind in den Figuren 4 und 9 gegenübergestellt.

Durch den Einsatz von Schallwellen konnte bei beiden Versuchsreihen die Wasseraufnahme gesteigert werden. Die Wassergehalte (Weichgrade) waren nach der ersten Nassweiche um 0,8 - 1,9 % und nach der zweiten Nassweiche bis zu 2,2 % erhöht. Auf Basis der Ergebnisse der Wasseraufnahme kann der beschallten Gerste ein besseres Ankeimverhalten und eine bessere Malzlösung unterstellt werden.

### 4.3 Ankeimung

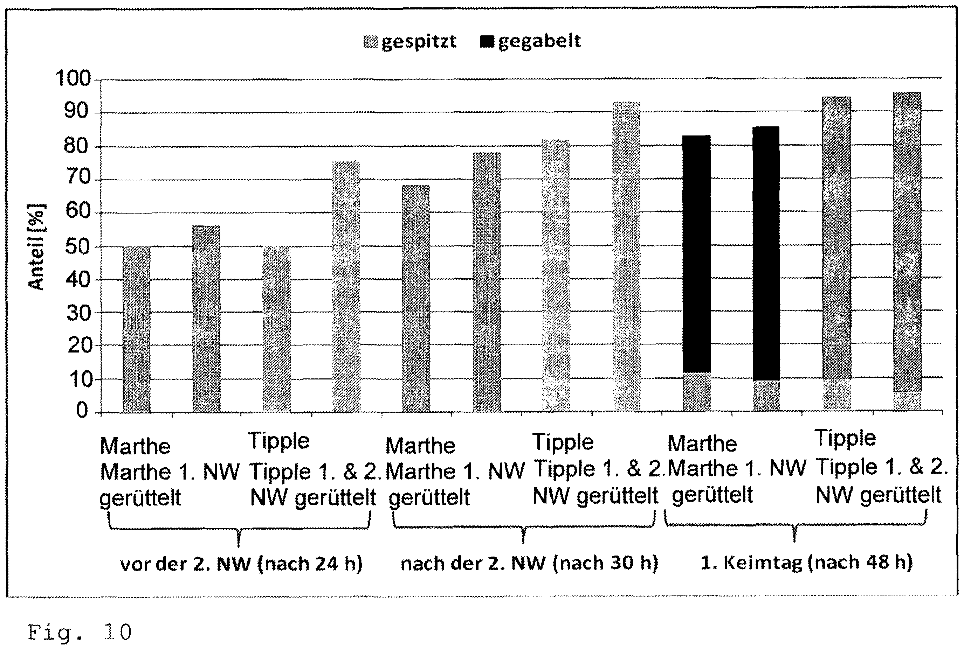

Zur Überprüfung der Ankeimgeschwindigkeit wurden nach 24, 30 und 48 Stunden die Anteile der gespitzten - das heißt ein Wurzelkeim wird sichtbar -, die gegabelten - das heißt zwei Wurzelkeime werden sichtbar - und die nicht gekeimten Anteile der Gerstenkörner ausgezählt. Die Ergebnisse sind in der Figur 10 dargestellt.

Durch den Einsatz von Schallwellen beim Weichen konnte die Ankeimung bei beiden Gersten deutlich beschleunigt werden. Dies ist ein Hinweis auf eine zu erwartende bessere Lösung der Malze bzw. auf die Möglichkeit einer Keimzeitverkürzung. Basierend auf einem gleichmäßigeren Einsetzen der Keimung konnte zusätzlich eine höhere Homogenität der beschallten Malzen aufgezeigt werden.

Bei der zweiten Versuchsreihe konnten bezüglich der Ankeimung keine Unterschiede festgestellt werden, weil ein durch die Nichtbelüftung verursachter Sauerstoffmangel in der hier 18,5-stündigen Luftrast zu einer Ankeimungsverzögerung führte und die Körner der verschiedenen Gerstenchargen nach der Erholung von der langen anaeroben Phase relativ gleich keimten.

### 4.4 Sauerstoffmessungen während den Nassweichen

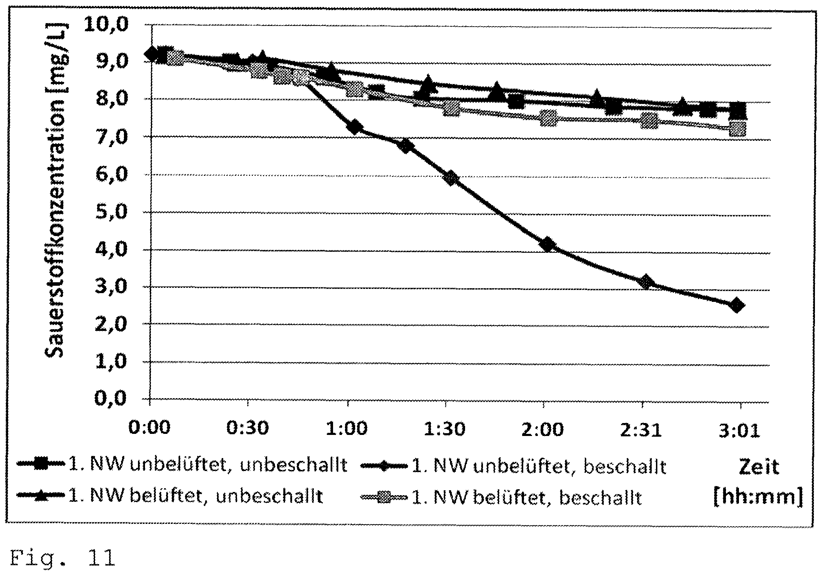

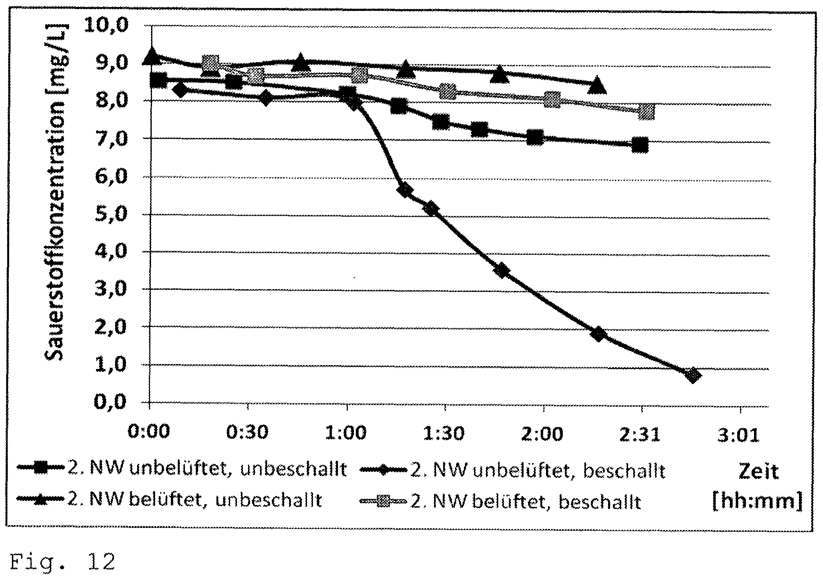

In der zweiten Versuchsreihe wurde die Sauerstoffkonzentration im Weichwasser periodisch bestimmt. Die Verläufe sind in den Figuren 11 und 12 dargestellt.

Anhand des unbelüfteten Versuches konnte aufgezeigt werden, dass der Sauerstoff durch die eingesetzte Beschallung grundsätzlich ausgetrieben wird (Einsatz der Schallwellen 20 bzw. 60 min nach Beginn der 1. bzw. 2. Nassweiche). Im Gegensatz dazu führt der Schallwelleneinsatz und der damit verbunden Sauerstoffaustrag bei der Versuchsreihe unter Belüftung zu keiner nennenswerten Abnahme im Sauerstoffgehalt des Weichwassers in der 1. und 2. Nassweiche.

Die Sauerstoffaufnahme der Gerste war in der ersten Nassweiche der Versuchsreihen aufgrund der geringeren Stoffwechselaktivität gegenüber der zweiten Nassweichen erwartungsgemäß geringer. Dennoch kann man davon ausgehen, dass die Sauerstoffkonzentration bei dem unbelüfteten und unbeschallten Versuch bei einem realen Gerste-Wasser-Verhältnis von 1:1 statt dem hier angewendeten von 1:3 etwas schneller abgenommen hätte. Dennoch war nach 3 Stunden der ersten Nassweiche etwa ein Drittel der anfänglichen Sauerstoffgehaltes vorhanden. Bei längeren Nassweichen, als 3 Stunden sollte demnach mit der Beschallung entsprechend gewartet werden.

### 4.5 Malzanalysen

Anhand der durchgeführten Malzanalysen in Versuchsreihe 1 konnten trotz schnellerer Ankeimung bei Anwendung der Schallwellen keine signifikante Steigerung der Malzqualität aufgezeigt werden. Die beiden Vergleichsmalze unterschieden sich lediglich in der Farbe und Kochfarbe, wobei die beschallten Malze eine geringere Farbe aufwiesen. Die niedrigeren Kochfarbwerte geben einen ersten Hinweis auf eine höhere oxidative Würzestabilität, die letztendlich zu einer höheren oxidativen Stabilität der Biere führen sollte. Allerdings waren bei den durchgeführten Untersuchungen der beschallten Malze die Enzymaktivitäten der Proteinase und β-Glukanase geringer als bei den unbeschallten Malzen. Aus der Gesamtbetrachtung der Analysenergebnisse erscheint es wahrscheinlich, dass sich die negativen Effekte der Schallwellen auf die Enzymaktivitäten und der positive Effekt auf die Ankeimung im fertigen Malz aufheben, so dass sich die resultierende Malzqualität bisher nicht signifikant unterscheidet.

Bei der zweiten Versuchsreihe wurde der Einsatz des Rüttlers von 50 auf 33 % der Nassweichzeit verkürzt, um eine geringere Enzymschädigungen zu erzielen. Bei den Proben ohne Belüftung waren alle Enzymaktivitäten sogar bei den beschallten Proben geringfügig höher (siehe Tab. 8). Beim belüfteten Versuch konnte lediglich für die Proteinase ein deutlicher Aktivitätsverlust aufgezeigt werden, was sich aber nicht negativ in der Eiweißlösung (Kolbachzahl, FAN-Gehalt widerspiegelte. Alle Parameter der Cytolyse (Viskosität, Mürbigkeit, β-Glukangehalt, Modifikation, photometrische Jodprobe) zeigten bei unter Belüftung und Schallwelleneinsatz eine weitergehende Lösung auf, so dass generell eine höhere Malzqualität nachgewiesen werden konnte.

**Tabelle 8: Malzanalysen der Versuchsreihe 2**

| | | Unbelüftet | | Belüftet | |
|---|---|---|---|---|---|
| Analyse | Einheit | ohne Rüttler | mit Rüttler | ohne Rüttler | mit Rüttler |
| Wassergehalt | % | 4,9 | 4,9 | 5,0 | 5, 0 |
| Extrakt (Malz-Trs.) | % | | | 83,2 | 83,4 |
| pH-Wert | | | | 5,95 | 5,94 |
| Trübung 90° | EBC | | | 9,9 | 14,0 |
| Polyphenole (Malz-Trs.) | mg/100g | | | 69 | 73 |
| Farbe | EBC | | | 3,5 | 3,4 |
| Kochfarbe | EBC | | | 5,7 | 5,4 |
| Gesamteiweiß (Malz-Trs.) | % | | | 8,82 | 9,07 |
| lösl. Stickstoff | mg/l | | | 720 | 736 |
| Kolbachzahl | % | | | 45,9 | 45,7 |
| FAN Malz (Trs.) | mg/100g | | | 128 | 137 |
| Viskosität (8,6%) | mPa*s | | | 1,521 | 1,514 |
| Mürbigkeit | % | 84,1 | 87,0 | 79,9 | 81,6 |
| Ganzglasigkeit | % | 0,7 | 0,6 | 0,7 | 1,4 |
| ß-Glukan (Malz-Trs.) | mg/100g | | | 409 | 336 |
| Modifikation | % | 84 | 91 | 87 | 92 |
| Homogenität | % | 67 | 81 | 73 | 79 |
| mittlere Blattkeimlänge | % | 60,5 | 61,0 | 60,6 | 62,1 |
| Homogenität der Blattkeimlänge | % | 87,5 | 90,7 | 89,0 | 93,5 |
| photometrische Jodprobe | dE | | | 0,55 | 0,37 |
| Enzymaktivitäten | | | | | |
| α-Amylase (Malz-Trs.) | U/g | 273 | 285 | 295 | 263 |
| β-Amylase (Malz-Trs.) | U/g | 713 | 725 | 773 | 702 |
| β-Glukanase (Malz-Trs.) | U/kg | 801 | 836 | 923 | 856 |
| Proteinase (Malz-Trs.) | U/kg | 206 | 219 | 238 | 147 |

### 4.6 Homogenität der Malze

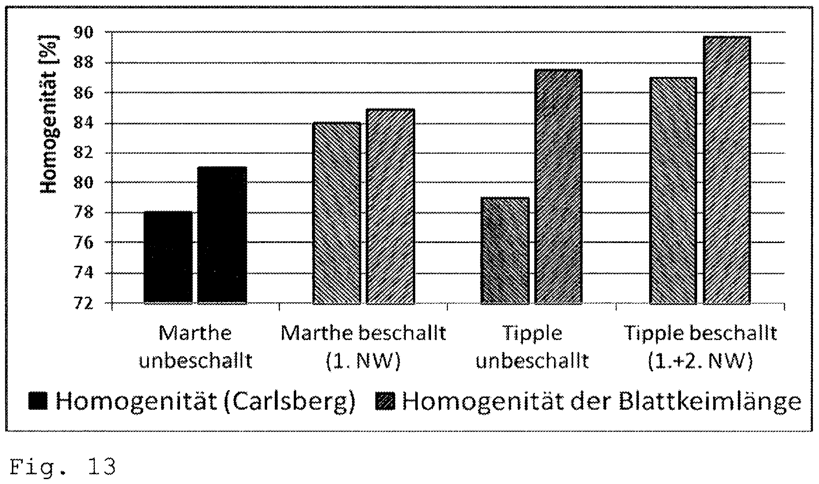

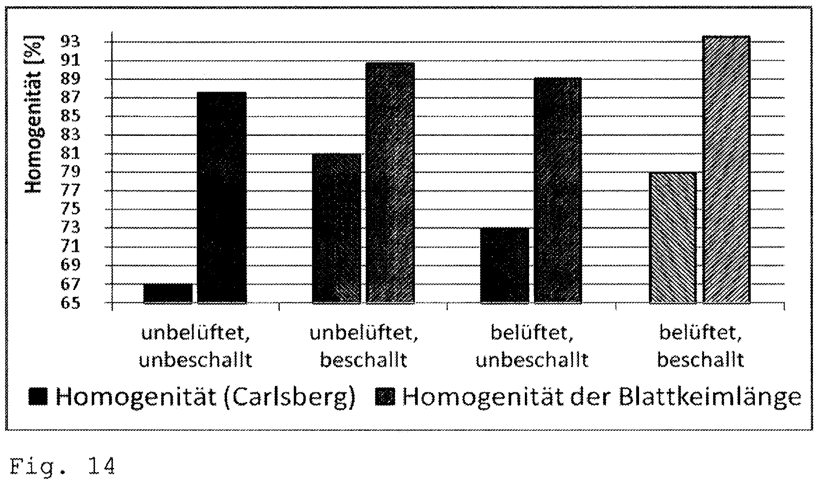

Der Einsatz der Schallwellen beim Weichen führte bei beiden Malzen in Versuchsreihe 1 und bei beiden Versuchen in Versuchsreihe 2 zu einer verbesserten Homogenität. Dies konnte mittels Calcofluor-Methode nach Carlsberg und mittels der Homogenität der Blattkeimlänge aufgezeigt werden. Die Ergebnisse sind in den Figuren 13 und 14 dargestellt.

### 4.7 Verarbeitbarkeit der Malze

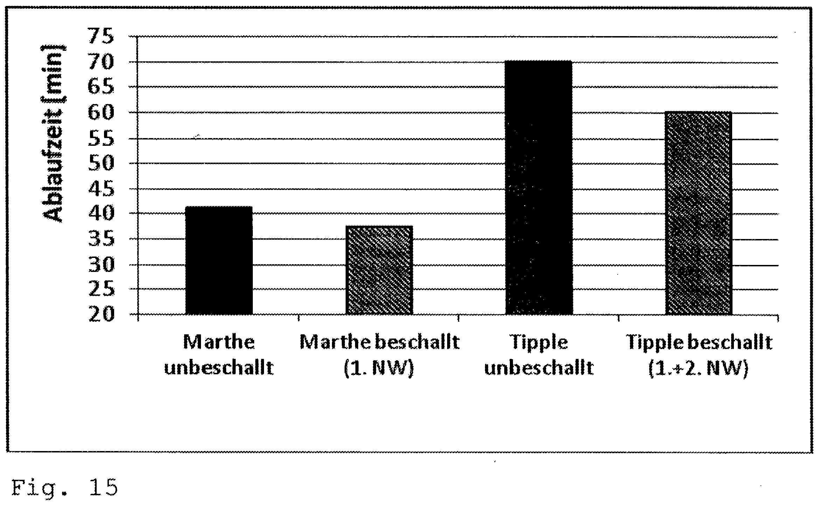

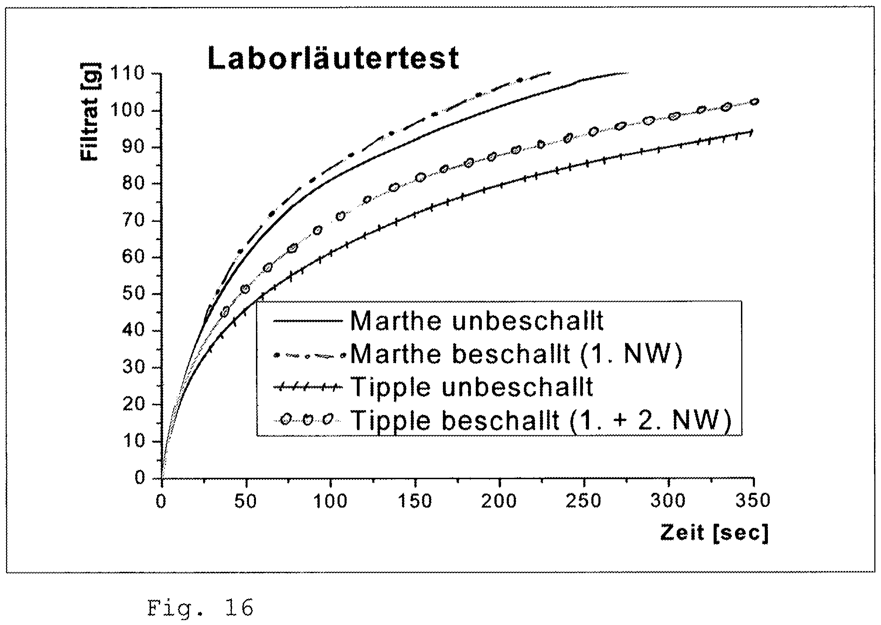

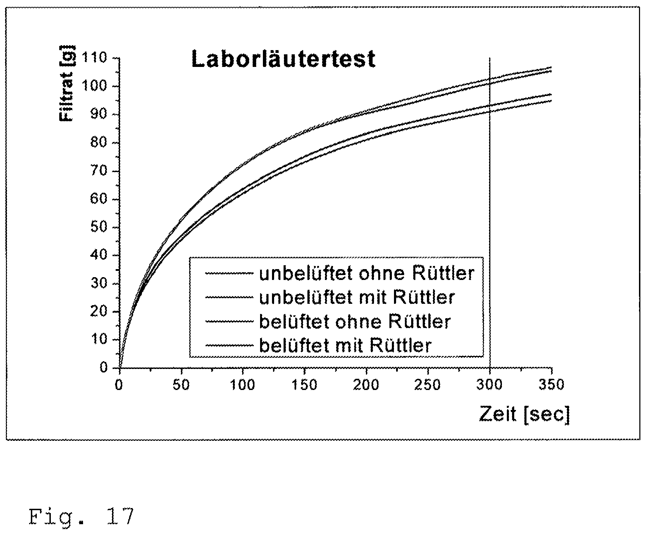

Zur Überprüfung der Verarbeitbarkeit der produzierten Malze wurde neben der Ablaufzeit nach MEBAK [13] ein fachgebietsinterner Laborläutertest eingesetzt. Die Verläufe der mittels Läutertest untersuchten Malze sind in den Figuren 15 bis 17 dargestellt.

Generell konnte in der ersten Versuchsreihe mittels beider eingesetzter Analysenmethoden für die Marthe-Malze gegenüber den Tipple-Malzen eine schnelleres Läuterverhalten nachgewiesen werden. Die Beschallung während der Weiche führte bei beiden Gersten zu einer verbesserten Läuterperformance im Vergleich zum Weichen ohne Beschallung.

Dieser Zusammenhang konnte ebenfalls anhand der Ergebnisse der zweiten Versuchsreihe bestätigt werden. Unabhängig von einer Belüftung während der Nassweichen ließen sich die beim Weichen gerüttelten Malze schneller läutern. In der Brauerei ist das Läutern in der Regel der geschwindigkeitsbestimmende Schritt in der Würzeproduktion. Daraus resultiert für die Brauereien ein enormer zeitlicher und finanzieller Vorteil bei Verwendung von Malze die mittels Schallwelleneinsatz beim Weichen produziert wurden.

### 4.8 Mikrobiologische Belastung der Malze

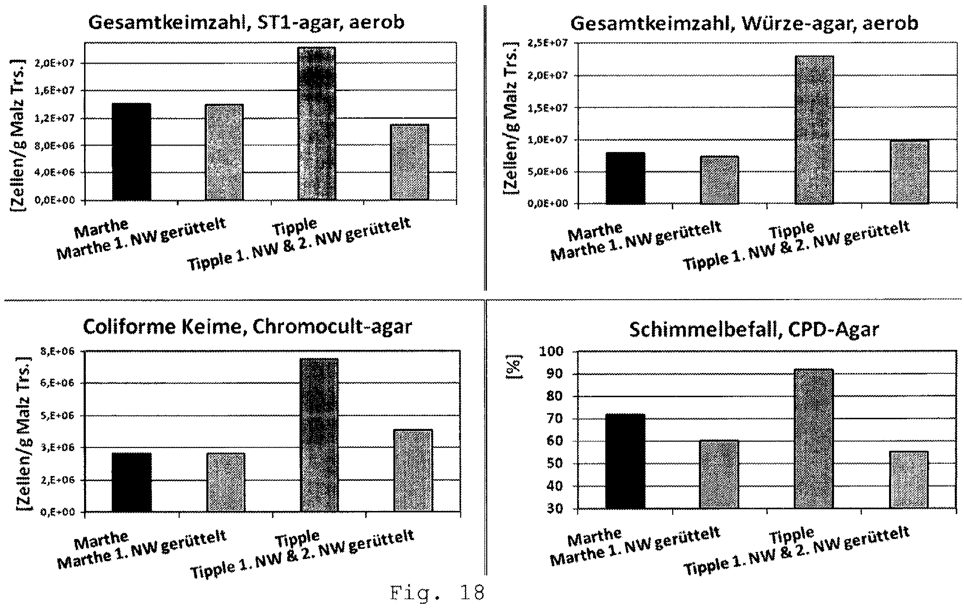

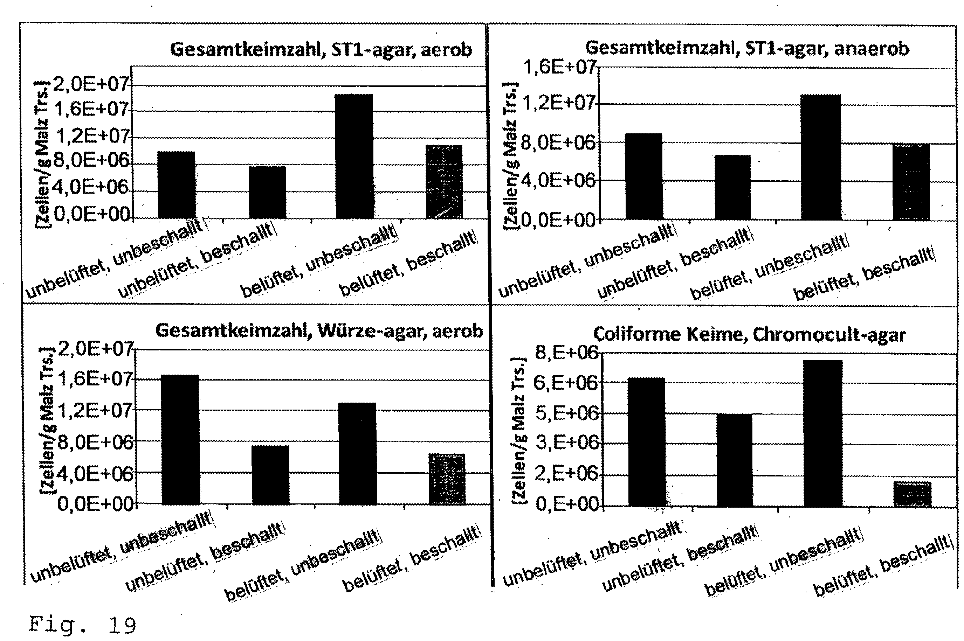

Die fertigen Malze wurden zusätzlich auf ihre mikrobiologische Belastung hin untersucht. Dazu wurden die Gesamtkeimzahlen mittels Würze und Standard 1-Agar (ST1), die Belastung mit coliformen Keimen mit einem Chromocult-Agar und die Schimmelpilzbelastung mittels CPD-Agar bestimmt. Anhand der in Figur 18 und 19 dargestellten Ergebnisse der Versuchsreihe 1 lässt sich erkennen, dass der starke Reinigungseffekt, der durch die CSB-Bestimmungen bereits dargestellt wurde, bei der stärker belasteten Gerste Tipple zu einer deutlichen Reduzierung der Keimbelastung führte. Hierbei scheint entweder die Schallwellenanwendung während der zweiten Nassweiche deutlich effektiver zu sein oder die von vorne herein geringer Belastung der Gerste Marthe konnte durch das Weichen nicht mehr signifikant reduziert werden, so dass sich die Belastung durch das Wachstum der Mikroorganismen während der Keimung wieder angeglichen hat. Dennoch konnte bei der Untersuchung der Schimmelbelastung der Gerste Marthe ebenfalls eine signifikante Reduzierung aufgezeigt werden. Der stärkere Reinigungseffekt und die damit verbundene Herabsetzung der mikrobiellen Belastung kann als positiver Einfluss der Schallwellenbehandlung eingestuft und hervorgehoben werden.

Die deutliche Reduzierung der mikrobiologichen Belastung durch den Wascheffekt der Beschallung mittels Rüttler konnte auch bei der zweiten Versuchsreihe bestätigt werden.

### 4.9 Eisenmessungen in Gerste und Malz

Bei den Versuchen unter Einsatz von Schallwellen in der ersten Versuchsreihe konnte im Vergleich zur Referenzprobe und dem ausschließlichen Einsatz des Rüttlers ohne Gerste ein erheblicher Eiseneintrag ins Weichwasser nachgewiesen werden, so dass eine entsprechende Verringerung des Eisengehaltes in der beschallten Gerste zu erwarten ist. Zur Verifizierung der vermuteten Gegebenheit wurden die Gerste Tipple und die mit und ohne Schallanwendung resultierenden Malze der ersten Versuchsreihe aufgeschlossen und der Gesamteisengehalt bestimmt. In Tabelle 9 sind die entsprechenden Eisengehalte gegenübergestellt.

**Tabelle 9: Berechnung und Vergleich der Eisengehalte in der Gerstensorte Tipple - Versuchsreihe 1**

| | Eisengehalt tatsächlich) [mg/kg] | Eisengehalt in der Malz-Trs. mit Berücksichtigung des Mälzungsschwandes (tatsächlich) [mg/kg] | Herausnahme durch das Weichen (tatsächlich) [%] |
|---|---|---|---|
| Gerste | 44 | **50,9** | - |
| Malz ohne Rüttler | 48,4 | **47,1** | **7,4** |
| Malz mit Rüttler | 40,8 | **39,6** | **22,2** |
| Differenz | | | **14,9 %** |

Anhand der Ergebnisse konnte erneut ein deutliches Auswaschen des Eisens durch Schallwelleneinsatz in der Nassweiche nachgewiesen werden. Zur Berücksichtigung der unterschiedlichen Wassergehalte in Gerste und Malz wurden die analysierten Eisengehalte zunächst auf die Trockensubstanz der Proben berechnet. Im Weiteren war es notwendig den Gewichtsverlust durch den Mälzungsschwand zu berücksichtigen, um die Werte vergleichen bzw. ein prozentuales Auswaschen berechnen zu können. Aus der Differenz der Eisengehalte beider Malze ergab sich rechnerisch eine zusätzliche Eisengehaltsreduzierung von etwa 15 %.

### 4.10 Eisenmessungen in der Würze

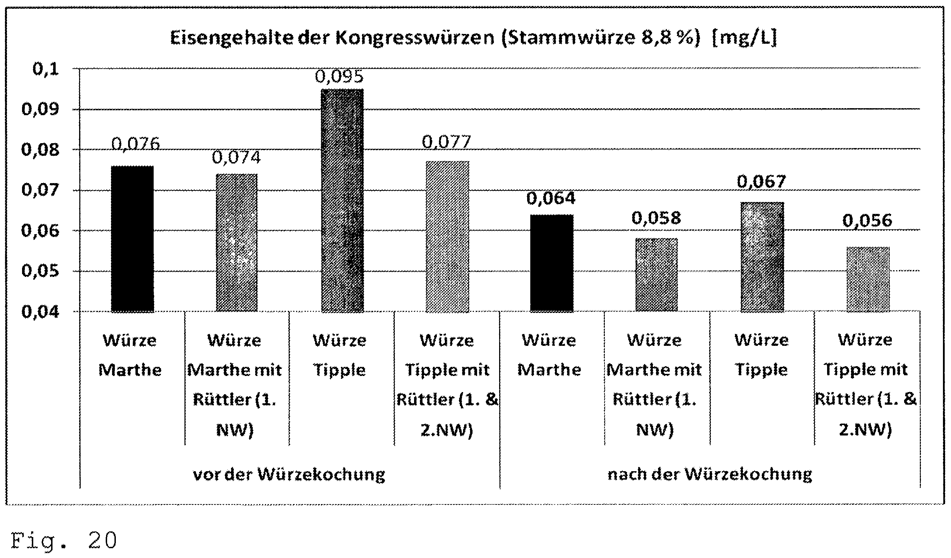

Aufgrund der großen Relevanz der Eisengehalte in Getränken bezüglich der Geschmackstabilität wurden aus den Malzen beider Gersten Würzen hergestellt und auf ihren Eisengehalt hin untersucht. Die Ergebnisse sind in der Figur 20 dargestellt.

Die Eisengehalte sind aufgrund der Heißtrubausfällung während der Würzekochung generell vor der Würzekochung etwas höher, da Eisen teilweise in dem gebildeten Heißtrub gebunden ist und über diesen Weg entfernt wird. Beim Vergleich der Eisengehalte der gekochten Würzen finden sich bei dem Versuch Marthe 9,4 % und beim Versuch Tipple, bei dem in beiden Nassweichen beschallt worden ist, 16,4 % weniger Eisen wieder. Letztere Differenz stimmt demnach auch annähernd mit der in den Tipple-Malzen ermittelten Eisengehalts-Differenz von 14,9 % annähernd überein, so dass hiermit ein weiterer Hinweis auf die Reduzierung des Eisengehaltes gegeben ist.

In der zweiten Versuchsreihe wurden ebenfalls vor und nach der Würzekochung Proben zur Eisenbestimmung entnommen um weitere Hinweise zum Einfluss des Schallwelleneinsatzes während der Nassweiche auf die oxidative Würzestabilität zu bekommen. In dieser Versuchsreihe wurde gegenüber dem Kongressmaischenverfahren nach MEBAK ein praxisorientierteres Maischprogramm (Einmaischen bei 55 °C - Rast 10 min, 62 °C - Rast 60 min, 72°C - Rast 20 min, Abmaischen 78 °C) angewendet. Obwohl ein anderes Maischprogramm und ein anderes Schüttungsverhältnis gewählt wurde, ergab sich der gleiche Trend bei den Eisenmessungen. In Analogie zu den Ergebnissen der ersten Versuchsreihe und den höheren Eisengehalten im Weichwasser konnte durch den Einsatz des Rüttlers der Eisengehalt in den Würzen herabgesetzt werden.

### 4.11 Oxidative Stabilität mittels ESR-Messungen

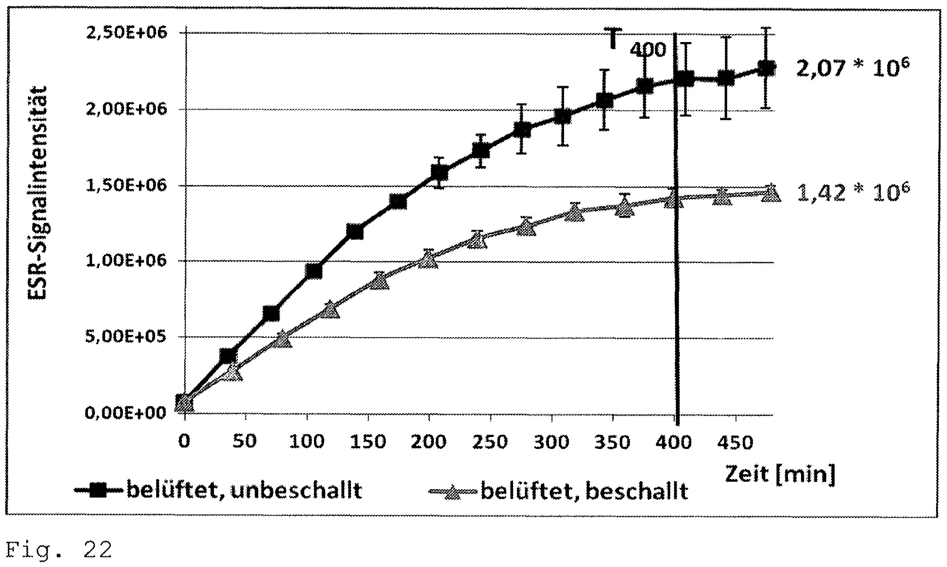

Aufgrund der unterschiedlichen Eisengehalte der aus den beschallten und unbeschallten Malzen produzierten Würzen wird eine Verbesserung der oxidativen Geschmacksstabilität erwartet. Zur Überprüfung dieses Sachverhalts wurde bei den Würzen der zweiten Versuchsreihe unter Belüftung der Nassweichen Analysen zum Nachweis der oxidativen Würzestabilität mittels ESR-Spektroskopie durchgeführt. Die Ergebnisse der ESR-Messungen sind in Figur 22 dargestellt.

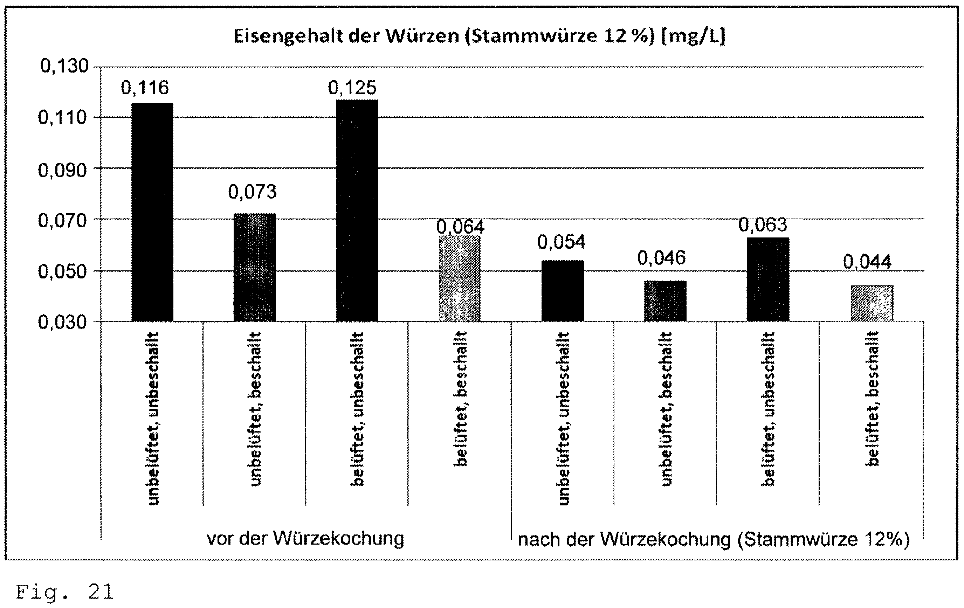

Die Ergebnisse der ESR-Messungen zur Bestimmung der oxidativen Würzestabilität zeigen die prooxidativ wirkenden Radikalgenerierung in der jeweiligen Würzematrix im Verlauf einer forcierten Alterung bei 60°C auf [34]. Hierbei ist der sogenannte T_{X}-Wert ein Maß für die Radikalgenerierung nach einer bestimmten Messzeit (z.B. T₄₀₀-Wert nach 400 min). Anhand der niedrigeren Radikalgenerierung in der aus dem beschallten Malz hergestellten Würze, konnte ein eindeutiger Vorteil der Beschallung während der Nassweichen aufgezeigt werden. Durch den ca. 30 % niedrigeren Eisengehalt in der Würze (siehe Figur 21) konnte die Radikalgenerierung um ca. 35 % herabgesetzt werden, was eine höhere oxidative Würzestabilität zur Folge hat. Dies ist ein eindeutiger Hinweis auf eine höhere zu erwartende Geschmacksstabilität von Bieren, die aus Malzen hergestellt werden, die unter Einsatz eines Rüttlers beim Weichen produziert werden.

### 5 Zusammenfassung

Generell verursachen die Schallwellen eine Mehrverschmutzung des Weichwassers und damit eine gesteigerte Reinigung der Gerste. Betrachtet man die gesamte Verschmutzung beider Weichwässer, zeigt sich, dass durch die Schallwellenanwendung in beiden Nassweichen im Vergleich zur Referenz 2-3 mal so viel Verunreinigungen von der Gerste entfernt wurde.

Der Reinigungseffekt konnte anhand von mikrobiologischen Untersuchungen bestätigt werden. Durch zwei beschallte Nassweichen konnte die Keimbelastung (Bakterien und Schimmelpilze) auf dem fertigen Malz um etwa 50 % reduziert werden.

Anhand der Prozesskontrolle während der Mälzung konnte eine um bis zu 2,2 % höhere Wasseraufnahme bei den beschallten Gersten aufgezeigt werden.

Die geringere mikrobiologische Belastung und der höhere Wassergehalt nach dem Weichen führten zu einer schnelleren und homogeneren Ankeimung der beschallten Gerste, was wiederum in einer höheren cytolytischen Lösung, bei vergleichbarer proteolytischen Lösung führte. Eine höhere cytolytische Lösung von Malzen führt in der Regel zu höheren Sudhausausbeute und zu einer besseren Läuterfähigkeit der Maische und Filtrierbarkeit der Biere.

Der Einfluss der Beschallung auf die Verarbeitbarkeit der produzierten Malze wurde mittels institutseigenem Laborläutertest überprüft, bei allen Versuchen konnte eine deutliche Verbesserung des Läuterverhaltens aufgezeigt werden. Der Einsatz beschallter Malze könnte somit zu einer Zeit und Kostenersparnis in der Brauerei führen.

Neben der generell höheren Malzqualität konnte auch die Homogenität der Malze erheblich verbessert werden, was mittels zweier Analysenmethoden (Carlsberg-Methode und Blattkeimlänge) nachgewiesen werden konnte. Heterogene Malze sorgen in Brauereien häufig zu Verarbeitungsschwierigkeiten in Läuter- und Filtrationsprozessen, da Teile der Körner stark und Teile gering cytolytisch gelöst sind. Somit können höhere Gehalte an höher molekularen β-Glukanen innerhalb einer Malzcharge vorhanden sein, was dann zu β-Glukan-Gelbildung führen kann. Die β-Glukangele erhöhen die Viskosität und verblocken Filterporen.

Außerdem konnte in der Versuchsreihe 1 um etwa 15 % mehr Eisen aus der Gerste "gewaschen" werden, was nachweislich zu einer in etwa gleichwertigen Reduzierung des Eisengehaltes in aus den Malzen produzierten Würzen führte. Aufgrund der prooxidative Wirkung von bestimmten Metallionen, wie insbesondere Eisen und Kupfer, durch Sauerstoffaktivierung und die katalytische Wirkung im Fenton-/Haber-Weissreaktionssystem ist technologisch betrachtet der Vorteil eines geringeren Eisengehaltes eine erhöhte oxidative Getränkestabilität. Bei den Untersuchungen mittels ESR-Spektroskopie konnte anhand der niedrigeren Radikalgenerierung in der aus dem beschallten Malz des belüfteten Versuches der zweiten Versuchsreihe hergestellten Würze ein eindeutiger Einfluss der Beschallung während der Nassweichen auf die oxidative Würzestabilität aufgezeigt werden. Durch den ca. 30 % niedrigeren Eisengehalt in der Würze (siehe Figur 21) konnte die Radikalgenerierung um ca. 35 % herabgesetzt werden, was eine höhere oxidative Würzestabilität zur Folge hat. Dies ist ein eindeutiger Hinweis auf eine höhere zu erwartende Geschmacksstabilität von Bieren, die aus Malzen hergestellt werden, die unter Einsatz eines Rüttlers beim Weichen produziert werden.

Ein zusätzlicher Vorteil der Eisenreduzierung könnte in Zukunft bei der Produktion von dunklen Malzen zum Tragen kommen. Bei Röstprozessen von Gersten und Malzen kommt es nach eigenen neusten Untersuchungen zu einer vermehrten Freisetzung von Eisen, das zu einem erheblichen Nachteil beim Einsatz vom dunklen Malzen bezüglich der oxidativen Getränkestabilität führt. Der Einsatz von Schallwellen könnte damit nicht nur für die Produktion von normalem Malz, sondern auch insbesondere für die Produktion von Spezialmalzen z.B. Farbmalz zum Einsatz kommen.

Die Schallwellenfrequenz sollte mindestens 100 Hz betragen. Bevorzugt wird eine Frequenz zwischen 180-300 Hz angewendet aber auch Frequenzen > 300 Hz sind denkbar.

Bei Weichsystemen mit Belüftungseinrichtung für die Nassweichen kann die Beschallung zu jeder Zeit eingesetzt werden, da der Sauerstoffgehalt des Weichwasser je nach Belüftungsintensität nur sehr langsam sinkt bzw. annähernd konstant bleibt. Ohne Belüftung wird Sauerstoff ausgetrieben, wobei dies aufgrund der erst im Laufe der Luftrast einsetzenden Keimung der Gerste in der ersten Nassweiche noch nicht von großer Bedeutung ist. In der zweiten Nassweiche hat die Keimung bereits eingesetzt und die Stoffwechselaktivität der Gerste ist schon stark beschleunigt. Deshalb sollte bei Weichsystemen ohne Belüftungseinrichtung in der zweiten Nassw4eiche erst nach einer gewissen Zeit, etwa 60 min, mit der Beschallung begonnen werden, da nach dieser Zeit der anfänglich vorhanden Sauerstoff im Weichwasser erfahrungsgemäß verbraucht. (unbelüftet erste Nassweiche bevorzugt die letzten 3-4 Stunden je nach Gesamtdauer, unbelüftet zweite Nassweiche bevorzugt nach 30 min., insbesondere bevorzugt nach 60 min)

### Literatur / Patente

1 Back, W., Forster, C., Krottenthaler, M., Lehmann, J., Sacher, B., Thum, B, Neue Forschungserkenntnisse zur Verbesserung der Geschmacksstabilität, Brauwelt 38, 1677-1692, 1997
2 Bamforth, C. W., Muller, R. E., Walker, M. D., Oxygen and Oxygen Radicals in Malting and Brewing: A Review, J. Am. Soc. Brew. Chem. 51(3), 79-87, 1993
3 Bright, D., Stewart, G.-G., Patino, H., A Novel Assay for Antioxidant Potential of Specialty Malts, J. Am. Soc. Brew. Chem. 57(4), 133-137, 1999
4 Coghe, S., Gheerraert, B., Michiels, A., Delvaux, F.-R., Development of Maillard Reaction Related Characteristics During Malting, J. Inst. Brew. 112(2), 148-156, 2006
5 Coghe, S.,Vanderhaegen, B., Pilgrims, B., Basteyns, A.-V., Delvaux, F.-R., Characterisation of Dark Specialty Malts: New Insights in Color Evaluation and Pro- and Antioxidative Activity, J. Am. Soc. Brew. Chem. 61(3), 125-133, 2003
6 Goupy, P., Hugues, M., Boivin, P., Amiot, M.-J., Antioxidant composition and activity of barley (Hordeum vulgare) and malt extracts and of isolated phenolic compounds, J. Sci.Food Agric. 79, 1625-1634, 1999
7 Clarkson, S.-P., Large, P.-J., Bamforth, C.-W., Oxygenscavenging enzymes in barley and malt and their effects during mashing, J. Inst. Brew. 98, 111-115, 1992
8 Goupy, P., Hugues, M., Boivin, P., Amiot, M.-J., Antioxidant compounds of barley (Hordeum vulgare) and malt extracts, EBC Proceedings, Cannes, 1999, 445-451
9 Kaneda, H., Kano, Y., Koshino, S., Ohya-Nishiguchi, H., Behavior and Role of Iron Ions in Beer Deterioration, J. Agric. Food Chem. 40, 2102-2107, 1992
10 Kretschmer, H., Miedaner, H., Narziß, L., Back, W., Der Einfluss des Sauerstoffgehaltes beim Keimen, Schwelken und Darren auf die Qualität von Malz und Bier, EBC Proceedings, Brüssel, 1995, 507-513
11 Kunz, T., Stephan, A., Methner, F.J., Kappl, R., Hüttermann, J., Grundlegendes zur Elektronenspinresonanz-Spektroskopie (ESR) und Untersuchungen zum Zusammenhang zwischen oxidativer Bierstabilität und dem SO2-Gehalt, Mschr. Brauwiss. 55, 7/8, 140-153, 2002
12 McFarlane, W.-D., Processing Variables as They May Affect the Oxidation of Beer, MBAA Technical Quarterly 4 (4), 239-244, 1967,
13 MEBAK, Brautechnische Analysenmethoden; Band I, 3. Auflage; Selbstverlag der MEBAK (Methodensammlung der Mitteleuropäischen Brautechnischen Analysenkommission); D-85350 Freising-Weihenstephan; 1993
14 Pinzino, C., Capocci, A., Saviozzi, F., Nanni, B., Zandomeneghi, M., Aging, Free Radicals,and Antioxidans in Wheat Seeds, J. Agric. Food Chem. 47, 1333-1339, 1999
15 Spieleder, E., Systematische Untersuchung von reduzierenden Substanzen im Malz und ihr Einfluss auf den Brauprozess,Dissertation, 1-212, 2006
16 Forster, C., Der Einfluss der Darrtechnologie auf die Malz- und Bierqualität, Dissertation, 1-274, 1996,
17 Kaukovirta-Norja, A., Reinikainen, P., Laakso, S., Olkku, J., Lipoxygenase activity during malting and storage of malt, EBC Proceedings, Brüssel, 1995, 193-200
18 Lulai, E.-C., Baker, C.-W., The Alteration and Distribution of Lipoxygenase in Malting Barley and Finished Malt, ASBC Proceedings 33, 154-158, 1975
19 Meyna, S., Freie- und triglycerid-gebundene Hydroxyfettsäuren in Gerste und Malz und ihre Bedeutung für die Geschmacksstabilität des Bieres, Dissertation, 1-126, 2005
20 Narziß, L., Rusitzka, P., Über die Veränderung der Enzyme während des Schwelken und Darrens, Mschr. Brauwiss. 30 (1), 1-11, 1977
21 Narziß, L., Rusitzka, P., Stippler, K., Der Einfluss des Schwelkprozesses auf die Entwicklung der Enzyme und einiger anderer Stoffgruppen des Malzes, EBC Proceedings, Salzburg, 1973, 85-98
22 Narziß, L., Sekin, Y., Über die Entwicklung der Peroxidase während des Mälzungs- und Brauprozesses, Mschr. Brauwiss. 27 (6), 155-163, 1974
23 Narziß, L., Sekin, Y.,Über das Verhalten der Katalase während des Mälzungs- und Maischprozesses, Mschr. Brauwiss. 27 (5), 121-129, 1974
24 Wackerbauer, K., Hardt, R., Hendschuch, S., LOX-Aktivität, Wiederkeimfähigkeit und hydroxylierte Fettsäuren in der Maische, Brauwelt 13/14, 442-446, 2002
25 Waesberghe, J.-W.-M., Geschmacksstabilität beginnt beim Malz und der Sudhausarbeit, Brauwelt 42, 1810-1815, 2001
26 Woffenden, H.-M., Ames, J.-M., Chandra, S., Anese, M., Nicoli, C., Effect of Kilning on the Antioxidant and Prooxidant Activities of Pale Malt, J. Agric. Food Chem. 50, 4925-4933, 2002
27 Narziß, L., Stippler, K., Der Einfluß des Schwelkverfahrens auf die herkömmlichen Analysedaten des Malzes, Mschr. Brauwiss. 29 (7), 199-206, 1976
28 Kunz, T., Strähmel, A., Cortes, N., Hense, W., Kroh, L.W. and Methner, F.-J. (2011). Influence of intermediate Maillard reaction products with endiol structure on the oxidative stability of beverages. J. Am. Soc. Brew. Chem., 2011, (in review)
29 Furukawa Suärez, A., Kunz, T., Cortes, N., MacKinlay, J., Hughes P. and Methner, F.-J., Impact of colour adjustment on flavour stability of pale lager beers with a range of distinct colouring agents, Food Chemistry, 2011, 125 (3), 850-859
30 Wilhelmson A, Laitila A, Vilpola A, Olkku J, Kotaviita E, Fagerstedt K, Home S., Oxygen Deficiency in Barley (Hordeum vulgare) Grain during Malting, J. Agric. Food Chem. 54: 409-416, 2006
31 French BJ, Mc Ruer GR. , Malt quality as affected by various steep aeration regimes, MBAA Technical Quaterly 27: 10-14, 1990
32 Aalbers V.-J., Drost B.-W., Pesman, L., Aerated Steeping Systems, MBAA Technical Quaterly 20: 74-79, 1983.
33 Schneid, R., Der Einfluss der Darrtechnologie auf die Malz- und Bierqualität, Dissertation, 1-138, 2009
34 Kunz, T., Methner, F.J., Kappl, R., Hüttermann, J., Verfahren zur Bestimmung des endogenen antioxidativen Potenzials von Getränken mittels ESR-Spektroskopie, Deutsche Patentanmeldung U30121, TU-Berlin/Universität des Saarlandes, IPAL Offenlegungsschrift Deutsches Patent- und Markenamt DE 10 2005 043 113 A1, 2005

## Patentansprüche

1. Mälzungsverfahren, insbesondere im Rahmen der Herstellung von Bier, bei dem Rohfrucht in Wasser eingeweicht wird, wobei während zumindest eines Zeitabschnitts des Einweichens das das Wasser und die Rohfrucht aufweisende Gemisch in eine mechanische Schwingung versetzt wird,
**dadurch gekennzeichnet, dass**
während des zumindest einen Zeitabschnitts des Einweichens das Gemisch in eine mechanische Schwingung versetzt wird, deren Schwingfrequenz einen Wert zwischen 180 und 300 Hz aufweist.

2. Mälzungsverfahren nach Anspruch 1,
**dadurch gekennzeichnet, dass**
die mechanische Schwingung durch ein Rütteln eines das Gemisch enthaltenden Weichgefäßes erzeugt wird.

3. Mälzungsverfahren nach Anspruch 2,
**dadurch gekennzeichnet, dass**
die mechanische Schwingung durch ein Rütteln des Weichgefäßes mit einer Rüttelfrequenz zwischen 180 und 300 Hz erzeugt wird.

4. Mälzungsverfahren nach einem der voranstehenden Ansprüche,
**dadurch gekennzeichnet, dass**
die mechanische Schwingung mit einer Rütteleinrichtung, insbesondere einer Rüttelplatte oder einem Zementrüttler, von außen erzeugt wird.

5. Mälzungsverfahren nach einem der voranstehenden Ansprüche,
**dadurch gekennzeichnet, dass**
die mechanische Schwingung mit einer in dem Gemisch befindlichen Schwingungserzeugungseinrichtung, insbesondere einem Zementrüttler, insbesondere einem Vibrator, insbesondere Innenvibrator, erzeugt wird.

6. Mälzungsverfahren nach einem der voranstehenden Ansprüche,
**dadurch gekennzeichnet, dass**
während zumindest eines Zeitabschnitts des Einweichens das Gemisch mit Sauerstoff oder einem sauerstoffhaltigen Gas, insbesondere Luft, belüftet wird.

7. Mälzungsverfahren nach einem der voranstehenden Ansprüche,
**dadurch gekennzeichnet, dass**
das Einweichen der Rohfrucht zumindest eine erste Einweichphase, eine auf die erste Einweichphase folgende Rastphase und eine auf die Rastphase folgende zweite Einweichphase umfasst.

8. Mälzungsverfahren nach Anspruch 7,
**dadurch gekennzeichnet, dass**
- die erste Einweichphase belüftungslos erfolgt und
- das Gemisch zumindest oder ausschließlich die letzten drei Stunden, vorzugsweise die letzten vier Stunden, der ersten Einweichphase in die mechanische Schwingung versetzt wird.

9. Mälzungsverfahren nach einem der voranstehenden Ansprüche 7-8,
**dadurch gekennzeichnet, dass**
- die zweite Einweichphase belüftungslos erfolgt und
- das Gemisch frühestens nach 30 Minuten, vorzugsweise frühestens nach 60 Minuten in die mechanische Schwingung versetzt wird.

10. Mälzungsverfahren nach einem der voranstehenden Ansprüche,
**dadurch gekennzeichnet, dass** als Rohfrucht Getreide, Gerste, Weizen, Roggen, Dinkel, Reis oder Mais eingeweicht wird.

11. Verfahren zum Herstellen von Bier, bei dem
- Malz hergestellt wird, wobei Rohfrucht in Wasser eingeweicht wird und während zumindest eines Zeitabschnitts des Einweichens das Gemisch in eine mechanische Schwingung versetzt wird, deren Schwingfrequenz eine Frequenz zwischen 180 und 300 Hz aufweist, und
- unter Verwendung dieses Malzes das Bier hergestellt wird.

12. Mälzeinrichtung mit einem Weichbehälter zum Einweichen von Rohfrucht in Wasser und einer Schwingungserzeugungseinrichtung,
**dadurch gekennzeichnet, dass**
die Schwingungserzeugungseinrichtung derart ausgestaltet ist, dass sie das das Wasser und die Rohfrucht aufweisende Gemisch in eine mechanische Schwingung versetzt, deren Schwingfrequenz einen Wert zwischen 180 und 300 Hz aufweist.

13. Mälzeinrichtung nach Anspruch 12,
**dadurch gekennzeichnet, dass**
die Schwingungserzeugungseinrichtung eine von außen auf das Weichgefäß einwirkende Rütteleinrichtung, insbesondere eine Rüttelplatte oder einen Zementrüttler, und/oder einen in dem Weichgefäß angeordneten Vibrator, insbesondere einem Zementrüttler, insbesondere einen Innenvibrator umfasst oder durch eine solche Rütteleinrichtung oder einen solchen Vibrator gebildet ist.

## Claims

1. Malting method, especially in the context of beer production, in which unmalted grain is softened in water, during which the mixture comprising the water and the unmalted grain is set in mechanical vibration for at least one period of time in the softening operation,
**characterized in that**
during the at least one period of time in the softening operation the mixture is set in mechanical vibration having a vibration frequency having a value between 180 and 300 Hz.

2. Malting method according to Claim 1,
**characterized in that**
the mechanical vibration is generated by agitation of a softening vessel containing the mixture.

3. Malting method according to Claim 2,
**characterized in that**
the mechanical vibration is generated by agitation of the softening vessel with an agitation frequency between 180 and 300 Hz.

4. Malting method according to any of the preceding claims,
**characterized in that**
the mechanical vibration is externally generated with an agitator unit, especially an agitator plate or a cement agitator.

5. Malting method according to any of the preceding claims,
**characterized in that**
the mechanical vibration is generated with a vibration-generating unit within the mixture, especially a cement agitator, especially a vibrator, especially an internal vibrator.

6. Malting method according to any of the preceding claims,
**characterized in that**
during at least one period of time in the softening operation the mixture is aerated with oxygen or an oxygenous gas, especially air.

7. Malting method according to any of the preceding claims,
**characterized in that**
the softening of the unmalted grain comprises at least one first softening phase, a rest phase that follows the first softening phase, and a second softening phase that follows the rest phase.

8. Malting method according to Claim 7,
**characterized in that**
- the first softening phase is effected without aeration and
- the mixture is set in the mechanical vibration at least or exclusively for the last three hours, preferably the last four hours, of the first softening phase.

9. Malting method according to either of the preceding claims 7-8,
**characterized in that**
- the second softening phase is effected without aeration and
- the mixture is set in the mechanical vibration no earlier than after 30 minutes, preferably no earlier than after 60 minutes.

10. Malting method according to any of the preceding claims,
**characterized in that** the unmalted grain softened is cereal, barley, wheat, rye, spelt, rice or maize.

11. Method of producing beer, in which
- malt is produced, wherein unmalted grain is softened in water and the mixture is set in mechanical vibration having a vibration frequency having a frequency between 180 and 300 Hz for at least one period of time in the softening operation, and
- the beer is produced using this malt.

12. Malting unit having a softening vessel for softening unmalted grain in water and a vibration-generating unit,
**characterized in that**
the vibration-generating unit is configured such that it sets the mixture comprising the water and the unmalted grain in mechanical vibration having a vibration frequency having a value between 180 and 300 Hz.

13. Malting unit according to Claim 12,
**characterized in that**
the vibration-generating unit comprises an agitation unit that acts externally on the softening vessel, especially an agitator plate or a cement agitator, and/or a vibrator disposed within the softening vessel, especially a cement agitator, especially an internal vibrator, or is formed by such an agitation unit or such a vibrator.

## Revendications

1. Procédé de maltage, en particulier dans le cadre de la fabrication de la bière, au cours duquel on ramollit le grain brut dans l'eau, dans lequel pendant au moins une partie du temps de ramollissement on met le mélange présentant l'eau et le grain brut en vibration mécanique, **caractérisé en ce que** pendant ladite au moins une partie du temps de ramollissement on met le mélange en vibration mécanique dont la fréquence de vibration présente une valeur comprise entre 180 et 300 Hz.

2. Procédé de maltage selon la revendication 1, **caractérisé en ce que** l'on produit la vibration mécanique par un secouage d'une cuve de ramollissement contenant le mélange.

3. Procédé de maltage selon la revendication 2, **caractérisé en ce que** l'on produit la vibration mécanique par un secouage de la cuve de ramollissement avec une fréquence de secouage comprise entre 180 et 300 Hz.

4. Procédé de maltage selon l'une quelconque des revendications précédentes, **caractérisé en ce que** l'on produit la vibration mécanique par l'extérieur avec un dispositif vibrant, en particulier une plaque vibrante ou un vibreur à ciment.

5. Procédé de maltage selon l'une quelconque des revendications précédentes, **caractérisé en ce que** l'on produit la vibration mécanique avec un dispositif de production de vibration se trouvant dans le mélange, en particulier un vibreur à ciment, en particulier un vibrateur, en particulier un vibrateur intérieur.

6. Procédé de maltage selon l'une quelconque des revendications précédentes, **caractérisé en ce que** l'on aère le mélange avec de l'oxygène ou un gaz contenant de l'oxygène, en particulier de l'air, pendant au moins une partie du temps de ramollissement.

7. Procédé de maltage selon l'une quelconque des revendications précédentes, **caractérisé en ce que** le ramollissement du grain brut comprend au moins une première phase de ramollissement, une phase de repos suivant la première phase de ramollissement et une seconde phase de ramollissement suivant la phase de repos.

8. Procédé de maltage selon la revendication 7, **caractérisé en ce que**
- on exécute la première phase de ramollissement sans aération et
- on met le mélange en vibration mécanique au moins ou exclusivement pendant les trois dernières heures, de préférence les quatre dernières heures, de la première phase de ramollissement.

9. Procédé de maltage selon une des revendications précédentes 7 ou 8, **caractérisé en ce que**
- on exécute la seconde phase de ramollissement sans aération et
- on met le mélange en vibration mécanique au plus tôt après 30 minutes, de préférence au plus tôt après 60 minutes.

10. Procédé de maltage selon l'une quelconque des revendications précédentes, **caractérisé en ce que** l'on ramollit comme grain brut des céréales, de l'orge, du froment, du seigle, de l'épeautre, du riz ou du maïs.

11. Procédé de fabrication de bière, dans lequel
- on fabrique du malt, dans lequel on ramollit le grain brut dans l'eau et on met le mélange en vibration mécanique, dont la fréquence de vibration présente une fréquence comprise entre 180 et 300 Hz, pendant au moins une partie du temps de ramollissement, et
- on fabrique la bière en utilisant ce malt.

12. Dispositif de maltage avec une cuve de ramollissement pour le ramollissement de grain brut dans l'eau et avec un dispositif de production de vibration, **caractérisé en ce que** le dispositif de production de vibration est configuré de telle manière qu'il mette le mélange présentant l'eau et le grain brut en vibration mécanique, dont la fréquence de vibration présente une valeur comprise entre 180 et 300 Hz.

13. Dispositif de maltage selon la revendication 12, **caractérisé en ce que** le dispositif de production de vibration comprend un dispositif de secouage agissant par l'extérieur sur la cuve de ramollissement, en particulier une plaque vibrante ou un vibreur à ciment, et/ou un vibrateur disposé dans la cuve de ramollissement, en particulier un vibreur à ciment, en particulier un vibrateur intérieur ou est formé par un tel dispositif vibrant ou un tel vibrateur.
